# EUROPEAN PATENT APPLICATION

(11) **EP 4 675 490 A1**
(43) Date of publication of application: **07.01.2026**
(21) Application number: 24773758.8
(22) Date of filing: 05.01.2024
(51) Int. Cl.: G06F 30/27, G06F 17/18

(54) **METHOD AND APPARATUS FOR GENERATING SIMULATION SCENE DATA, AND DEVICE**

(30) Priority: 20.03.2023 CN 202310278169
(71) Applicant: Huawei Technologies Co., Ltd., Shenzhen, Guangdong 518129 (CN)
(72) Inventor: LIU, Yuecheng, Shenzhen, Guangdong 518129 (CN); ZHUANG, Yuzheng, Shenzhen, Guangdong 518129 (CN); KAI, Shixiong, Shenzhen, Guangdong 518129 (CN); GU, Qiang, Shenzhen, Guangdong 518129 (CN); WANG, Bin, Shenzhen, Guangdong 518129 (CN)
(74) Representative: Isarpatent
(86) International application number: PCT/CN2024/070830
(87) International publication number: WO 2024/193188

(57) **Abstract**

A method and an apparatus for generating simulation scenario data, and a device are provided, and are applicable to the field of computer technologies, to improve diversity of simulation scenario data. The method includes: obtaining road test data collected when an autonomous driving vehicle carries out a traveling test on a real road; generalizing a traffic scenario in the road test data, to obtain generalized road test data; and converting obstacle behavior in the generalized road test data into interactive behavior, to obtain simulation scenario data. The real road test data is extended to road test data having more traffic scenario types, so that the road test data having more traffic scenario types can be used to generate real and diversified simulation scenarios. The obstacle behavior in the road test data is converted into the interactive behavior, so that an obstacle can have a capability of interacting with an autonomous driving vehicle. In this way, the simulation scenarios can respond to a change in an autonomous driving system, to effectively ensure interactivity of the simulation scenarios.

## Description

### CROSS-REFERENCE TO RELATED APPLICATIONS

This application claims priority to Chinese Patent Application No. 202310278169.2, filed with the China National Intellectual Property Administration on March 20, 2023 and entitled "METHOD AND APPARATUS FOR GENERATING SIMULATION SCENARIO DATA, AND DEVICE", which is incorporated herein by reference in its entirety.

### TECHNICAL FIELD

This application relates to the field of computer technologies, and in particular, to a method and an apparatus for generating simulation scenario data, and a device.

### BACKGROUND

An autonomous driving vehicle often encounters a series of dangerous working conditions in a traveling process. This imposes a high requirement on safety of an autonomous driving planning and control system. To effectively evaluate and test a capability of the autonomous driving planning and control system to cope with such dangerous working conditions, currently, a simulation test needs to be carried out on the autonomous driving vehicle before delivery, and such dangerous working conditions are reproduced in a simulation scenario, to carry out a targeted test on the autonomous driving planning and control system.

In view of this, the industry proposes a series of methods for generating a simulation scenario. However, these methods either reproduce a real road test scenario, or one-to-one replace an obstacle in a real road test scenario. Regardless of which manner is used, only simulation scenarios that completely depend on the real road test scenario can be constructed. These simulation scenarios are small in quantity, insufficient in variety, and poor in diversity. This is not conducive to test effect and subsequent improvement of the autonomous driving planning and control system.

Therefore, currently, generation of an autonomous driving simulation scenario needs to be further studied.

### SUMMARY

This application provides a method and an apparatus for generating simulation scenario data, and a device, to generate simulation scenario data with good diversity.

According to a first aspect, this application provides a method for generating simulation scenario data. The method is applicable to a computing device having a processing capability, such as a personal computer, a server, a vehicle-mounted mobile terminal, an industrial computer, or an embedded device, or a chip, a chip system, a circuit, or a circuit system that supports a computing device in implementing the method, such as a chip, a chip system, a circuit, or a circuit system that is disposed on a personal computer, a server, a vehicle-mounted mobile terminal, an industrial computer, or an embedded device. In some examples, the method for generating simulation scenario data may be implemented by a server or a virtual machine on a cloud. The server or the virtual machine on the cloud may be further connected to a to-be-tested autonomous driving vehicle, to use generated simulation scenario data to carry out a simulation test on the autonomous driving vehicle. The method includes:
obtaining road test data collected when an autonomous driving vehicle carries out a traveling test on a real road; then generalizing a traffic scenario in the road test data, to obtain generalized road test data; and converting obstacle behavior in the generalized road test data into interactive behavior, to obtain simulation scenario data.

In the foregoing design, the traffic scenario in the real road test data is generalized, so that the real road test data can be extended to virtual road test data having more traffic scenario types, and the virtual road test data having more traffic scenario types can be used to generate more diversified simulation traffic scenarios. This ensures authenticity of the simulation traffic scenarios and improves diversity of the simulation traffic scenarios. In addition, the diversified simulation traffic scenarios can be implemented through a data processing operation, with no need for a plurality of road tests. This further helps reduce an algorithm iteration cycle of an autonomous driving planning and control system and improve test efficiency and algorithm iteration efficiency of the autonomous driving planning and control system. In addition, the obstacle behavior in the road test data is converted into the interactive behavior, so that these obstacles have a capability of interacting with an autonomous driving vehicle. In this way, the generated simulation traffic scenarios can also respond to a change in the autonomous driving planning and control system, to effectively ensure interactivity of the simulation scenarios.

In a possible design, the generalizing a traffic scenario in the traffic scenario data, to obtain generalized road test data includes: generalizing the traffic scenario in the traffic scenario data based on a traffic scenario generalization condition from a user, to obtain the generalized road test data.

In the foregoing design, providing, to the user, a traffic scenario generalization parameter that can be input can help the user input a required traffic scenario generalization condition according to an actual requirement of the user, to generate a simulation scenario through generalization for a traffic scenario required by the user, so that controllability of a traffic scenario generalization process is ensured.

In a further design, the traffic scenario generalization condition may include one or more of the following: a vehicle flow density, a vehicle speed, road topology, a pedestrian density, a pedestrian walking speed, or the like.

In the foregoing design, based on an original vehicle flow, original road topology, and an original pedestrian, a new traffic scenario different from one or more of the original vehicle flow, the original road topology, or the original pedestrian can be obtained through generalization, so that generated simulation scenarios are more diversified.

In a further design, the generalizing the traffic scenario in the traffic scenario data based on a traffic scenario generalization condition from a user, to obtain the generalized road test data includes: first receiving the traffic scenario generalization condition from the user, and then inputting the road test data and the traffic scenario generalization condition into a traffic scenario generalization model, to obtain the generalized road test data output by the traffic scenario generalization model. The generalized road test data is obtained by the traffic scenario generalization model by generalizing traffic scenario information in the road test data based on the traffic scenario generalization condition.

In the foregoing design, generalization of the traffic scenario is completed by using the model, so that manual participation in a generalization process can be avoided. This can ensure generalization efficiency and reduce labor costs.

In a further design, the inputting the road test data and the traffic scenario generalization condition into a traffic scenario generalization model, to obtain the generalized road test data output by the traffic scenario generalization model includes: first slicing the road test data by using an interaction type between a dynamic obstacle and the autonomous driving vehicle as a reference, to obtain at least one time slice, where each time slice includes road test data corresponding to at least one interaction type; and then inputting each time slice and the traffic scenario generalization condition into the traffic scenario generalization model, to obtain generalized road test data that corresponds to each time slice and that is output by the traffic scenario generalization model. The generalized road test data corresponding to each time slice includes a dynamic obstacle implementing an interaction type corresponding to the time slice and one or more other dynamic obstacles.

In the foregoing design, slicing is performed based on the interaction type, and a traffic scenario in each time slice obtained through the slicing is separately generalized. This can reduce an amount of data that needs to be processed during one time of generalization, and generalize a dynamic obstacle in each time slice other than the dynamic obstacle corresponding to the included interaction type in a more targeted manner, to ensure that the generalized road test data can accurately retain the original interaction type and improve authenticity of the generalized road test data.

In a further design, the traffic scenario generalization model may be obtained through training in the following manner: first obtaining historical road test data collected when a historical autonomous driving vehicle carries out a traveling test on a real road, then extracting, from the historical road test data, a traffic scenario feature corresponding to each interaction type, and finally obtaining the traffic scenario generalization model through training based on the traffic scenario feature corresponding to each interaction type.

In the foregoing design, the traffic scenario generalization model is trained by using real road test data such as the historical road test data, so that the traffic scenario generalization model can also have a good capability of generalizing similar road test data. The traffic scenario feature corresponding to each interaction type in the historical road test data is extracted, so that the traffic scenario generalization model covers the traffic scenario feature corresponding to each interaction type and can accurately generalize a traffic scenario of each interaction type. This helps improve generalization effect.

In a possible design, the converting obstacle behavior in the generalized road test data into interactive behavior includes: converting behavior of a key dynamic obstacle located around the autonomous driving vehicle into the interactive behavior.

In the foregoing design, dynamic obstacles located around the autonomous driving vehicle have a high probability of interacting with the autonomous driving vehicle. An interactive capability is allocated to these dynamic obstacles instead of allocating an interactive capability to all dynamic obstacles. In this way, it is ensured that a dynamic obstacle having a high probability of interacting with the autonomous driving vehicle has an interactive attribute in the simulation scenario data, and processing on a dynamic obstacle having a low or even no probability of interacting with the autonomous driving vehicle is avoided. This helps save processing resources and improve efficiency in generating the simulation scenario data.

In a possible design, the converting obstacle behavior in the generalized road test data into interactive behavior includes: first predicting a probability distribution of a dynamic obstacle in the generalized road test data in each behavior mode, then allocating a target behavior mode to the dynamic obstacle based on the probability distribution, and finally replacing behavior data of the dynamic obstacle with an interactive behavior model corresponding to the target behavior mode.

In the foregoing design, the probability distribution of the dynamic obstacle in each behavior mode is obtained through prediction based on a behavior trajectory of the dynamic obstacle in real road test data, and represents a behavior habit of the dynamic obstacle on a real road. In this case, the target behavior mode is allocated to the dynamic obstacle based on the probability distribution, so that a generated simulation scenario can accurately match a real behavior condition of the dynamic obstacle. This helps further improve authenticity of the simulation scenario.

In a further design, the predicting a probability distribution of a dynamic obstacle in the generalized road test data in each behavior mode includes: predicting, based on an interaction type generalization condition from the user, a probability distribution of the dynamic obstacle in the generalized road test data in each behavior mode corresponding to the interaction type generalization condition.

In the foregoing design, an interaction type generalization parameter that can be input is provided to the user, so that a corresponding interactive behavior model can be adaptively allocated to each dynamic obstacle in a simulation scenario based on the target interaction type specified by the user, to generate a simulation scenario through generalization for the target interaction type specified by the user. This ensures authenticity of the simulation scenario and improves controllability and diversity of an interaction type generalization process.

In a further design, the predicting, based on an interaction type generalization condition from the user, a probability distribution of the dynamic obstacle in the generalized road test data in each behavior mode corresponding to the interaction type generalization condition includes: first receiving the interaction type generalization condition from the user, where the interaction type generalization condition includes a target interaction type; and then inputting the generalized road test data and the target interaction type into a behavior model allocator, to obtain a probability distribution that is of each dynamic obstacle in each behavior mode corresponding to the target interaction type and that is output by the behavior model allocator.

In the foregoing design, generalization of the interaction type is completed by using the model, so that there may be no need for manual participation in the generalization. This can ensure generalization efficiency and reduce labor costs.

In a further design, the behavior model allocator may be obtained through training in the following manner: first obtaining historical road test data collected when a historical autonomous driving vehicle carries out a traveling test on a real road; then determining a behavior mode of each dynamic obstacle in the historical road test data; next slicing the historical road test data by using an interaction type between the dynamic obstacle and the autonomous driving vehicle as a reference, to obtain at least one first historical time slice, where each first historical time slice includes historical road test data corresponding to at least one interaction type; and finally, obtaining, from the at least one first historical time slice, all first historical time slices including a same interaction type, and obtaining the behavior model allocator through training based on all the first historical time slices including the same interaction type and a behavior mode of a dynamic obstacle in each first historical time slice.

In the foregoing design, the behavior model allocator is trained by using real road test data such as the historical road test data, so that the behavior model allocator can also have a good capability of predicting similar road test data. In addition, each time slice corresponding to each interaction type is centrally analyzed in a targeted manner, so that the behavior model allocator covers a feature in each behavior mode corresponding to each interaction type. In this way, a probability of a dynamic obstacle in each behavior mode corresponding to each interaction type can be accurately predicted, thereby helping improve effect of making behavior of the dynamic obstacle interactive.

In a further design, the interactive behavior model may be obtained through training in the following manner: first obtaining historical road test data collected when a historical autonomous driving vehicle carries out a traveling test on a real road; then slicing the historical road test data by using a dynamic obstacle as a reference, to obtain at least one second historical time slice, where each second historical time slice includes historical road test data corresponding to at least one dynamic obstacle; next determining a behavior mode of the dynamic obstacle included in each second historical time slice; and finally obtaining, through training based on each second historical time slice corresponding to each dynamic obstacle including a same behavior mode, an interactive behavior model corresponding to the behavior mode.

In the foregoing design, the time slice of each dynamic obstacle having the same behavior mode is centrally analyzed in a targeted manner, so that an interaction trajectory between a dynamic obstacle corresponding to each behavior mode and the autonomous driving vehicle can be extracted; and the interaction trajectory is used as an interactive behavior model corresponding to the behavior mode, so that a dynamic obstacle for which replacement with the interactive behavior model is performed has a capability of interacting with an autonomous driving vehicle. This helps achieve interactive effect of a dynamic obstacle in the simulation scenario data.

In a possible design, the target interaction type may include one or more of the following: vehicle following, vehicle cut-in, merging from a ramp, or collision interaction; and/or the behavior mode may include one or more of the following: leftward lane change, rightward lane change, lane keeping, smooth merging, or aggressive merging.

In the foregoing design, the method for generating simulation scenario data is applicable to a plurality of target interaction types and/or a plurality of behavior modes, so that an application scenario of the simulation scenario data can be increased, and universality of the simulation scenario data can be improved.

According to a second aspect, this application provides an apparatus for generating simulation scenario data, including: an obtaining unit, configured to obtain road test data collected when an autonomous driving vehicle carries out a traveling test on a real road; a generalization unit, configured to generalize a traffic scenario in the road test data, to obtain generalized road test data; and a conversion unit, configured to convert obstacle behavior in the generalized road test data into interactive behavior, to obtain simulation scenario data.

In a possible design, the generalization unit is specifically configured to generalize the traffic scenario in the traffic scenario data based on a traffic scenario generalization condition from a user, to obtain the generalized road test data.

In a further design, the traffic scenario generalization condition includes one or more of the following: a vehicle flow density, a vehicle speed, road topology, a pedestrian density, or a pedestrian walking speed.

In a further design, the generalization unit is specifically configured to: receive the traffic scenario generalization condition from the user, and input the road test data and the traffic scenario generalization condition into a traffic scenario generalization model, to obtain the generalized road test data output by the traffic scenario generalization model. The generalized road test data is obtained by the traffic scenario generalization model by generalizing traffic scenario information in the road test data based on the traffic scenario generalization condition.

In a further design, the generalization unit is specifically configured to: first slice the road test data by using an interaction type between a dynamic obstacle and the autonomous driving vehicle as a reference, to obtain at least one time slice, where each time slice includes road test data corresponding to at least one interaction type; and then input each time slice and the traffic scenario generalization condition into the traffic scenario generalization model, to obtain generalized road test data that corresponds to each time slice and that is output by the traffic scenario generalization model. The generalized road test data corresponding to each time slice includes a dynamic obstacle implementing an interaction type corresponding to the time slice and one or more other dynamic obstacles.

In a possible design, the apparatus for generating simulation scenario data may further include a model generation unit. The model generation unit is configured to: obtain historical road test data collected when a historical autonomous driving vehicle carries out a traveling test on a real road, extract, from the historical road test data, a traffic scenario feature corresponding to each interaction type, and obtain the traffic scenario generalization model through training based on the traffic scenario feature corresponding to each interaction type.

In a possible design, the conversion unit is specifically configured to convert behavior of a key dynamic obstacle located around the autonomous driving vehicle into the interactive behavior.

In a possible design, the conversion unit is specifically configured to: predict a probability distribution of a dynamic obstacle in the generalized road test data in each behavior mode, allocate a target behavior mode to the dynamic obstacle based on the probability distribution, and replace behavior data of the dynamic obstacle with an interactive behavior model corresponding to the target behavior mode.

In a further design, the conversion unit is specifically configured to predict, based on an interaction type generalization condition from the user, a probability distribution of the dynamic obstacle in the generalized road test data in each behavior mode corresponding to the interaction type generalization condition.

In a further design, the conversion unit is specifically configured to: first receive the interaction type generalization condition from the user, where the interaction type generalization condition includes a target interaction type; and then input the generalized road test data and the target interaction type into a behavior model allocator, to obtain a probability distribution that is of the dynamic obstacle in each behavior mode corresponding to the target interaction type and that is output by the behavior model allocator.

In a possible design, the apparatus for generating simulation scenario data may further include the model generation unit. The model generation unit is configured to: first obtain historical road test data collected when a historical autonomous driving vehicle carries out a traveling test on a real road; then determine a behavior mode of each dynamic obstacle in the historical road test data; next slice the historical road test data by using an interaction type between the dynamic obstacle and the autonomous driving vehicle as a reference, to obtain at least one first historical time slice, where each first historical time slice includes historical road test data corresponding to at least one interaction type; and finally, obtain, from the at least one first historical time slice, all first historical time slices including a same interaction type, and obtain the behavior model allocator through training based on all the first historical time slices including the same interaction type and a behavior mode of a dynamic obstacle in each first historical time slice.

In a possible design, the apparatus for generating simulation scenario data may further include the model generation unit. The model generation unit is configured to: first obtain historical road test data collected when a historical autonomous driving vehicle carries out a traveling test on a real road; then slice the historical road test data by using a dynamic obstacle as a reference, to obtain at least one second historical time slice, where each second historical time slice includes historical road test data corresponding to at least one dynamic obstacle; next determine a behavior mode of the dynamic obstacle included in each second historical time slice; and finally obtain, through training based on each second historical time slice corresponding to each dynamic obstacle including a same behavior mode, an interactive behavior model corresponding to the behavior mode.

In a possible design, the target interaction type may include one or more of the following: vehicle following, vehicle cut-in, merging from a ramp, or collision interaction.

In a possible design, the behavior mode may include one or more of the following: leftward lane change, rightward lane change, lane keeping, smooth merging, aggressive merging, or the like.

According to a third aspect, this application provides a computing device, including a processor. The processor is coupled to a memory, and the processor is configured to execute a computer program stored in the memory, to enable the electronic device to perform the method according to any design of the first aspect.

According to a fourth aspect, this application provides a computing device, including a processor and a memory. The processor is coupled to the memory, and the processor is configured to execute a computer program stored in the memory, to enable the electronic device to perform the method according to any design of the first aspect.

According to a fifth aspect, this application provides a computing device, including a processor, a memory, and a transceiver. The processor is coupled to the memory, and the processor is configured to execute a computer program stored in the memory, to invoke the transceiver to implement the method according to any design of the first aspect.

According to a sixth aspect, this application provides a chip. The chip may include a processor and an interface. The processor is configured to read an instruction through the interface, to perform the method according to any design of the first aspect.

According to a seventh aspect, this application provides a computer-readable storage medium. The computer-readable storage medium stores a computer program. When the computer program is run, the method according to any design of the first aspect is implemented.

According to an eighth aspect, this application provides a computer program product. When the computer program product is run on a processor, the method according to any design of the first aspect is implemented.

For beneficial effects of the second aspect to the eighth aspect, specifically refer to technical effects that can be achieved by corresponding designs in the first aspect. Details are not described herein again.

### BRIEF DESCRIPTION OF DRAWINGS

FIG. 1 is a diagram of an example of an application scenario of an autonomous driving simulation test according to an embodiment of this application;
FIG. 2 is a schematic flowchart of an example of a method for generating simulation scenario data according to an embodiment of this application;
FIG. 3 is a schematic flowchart of an example of a method for replacement with an interactive behavior model according to an embodiment of this application;
FIG. 4 is a schematic flowchart of a method for training a behavior model allocator according to an embodiment of this application;
FIG. 5 is a schematic flowchart of an example of a model generation phase according to an embodiment of this application;
FIG. 6 is a schematic flowchart of an example of a model use phase according to an embodiment of this application;
FIG. 7 is a diagram of an example of an architecture of a system for generating a simulation scenario according to an embodiment of this application;
FIG. 8 is a diagram of an example of a structure of an apparatus for generating simulation scenario data according to an embodiment of this application; and
FIG. 9 is a diagram of an example of a structure of another apparatus for generating simulation scenario data according to an embodiment of this application.

### DESCRIPTION OF EMBODIMENTS

The following clearly and completely describes technical solutions in embodiments of this application with reference to accompanying drawings in embodiments of this application. It is clear that the described embodiments are merely some but not all of embodiments of this application.

In descriptions of this application, "at least one" means one or more, and "a plurality of" means two or more. In view of this, in embodiments of the present invention, "a plurality of" may also be understood as "at least two". "And/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including a singular item (piece) or any combination of plural items (pieces). For example, at least one of a, b, or c may indicate: a, b, c, a and b, a and c, b and c, or a, b, and c, where a, b, and c may be singular or plural.

In addition, unless otherwise specified, ordinal numbers such as "first" and "second" in embodiments of this application are for distinguishing between a plurality of objects, but are not intended to limit priorities or importance of the plurality of objects. For example, a first historical time slice is a historical time slice obtained by slicing historical road test data by using an interaction type as a reference, and a second historical time slice is a historical time slice obtained by slicing historical road test data by using a dynamic obstacle as a reference. This does not mean that priorities or importance of the two historical time slices are different.

In addition, "connection" in the following embodiments of this application may be electrical connection, and connection between two electrical elements may be direct or indirect connection between the two electrical elements. For example, that A is connected to B may be that A is directly connected to B, or may be that A is indirectly connected to B through one or more other electrical elements. For example, that A is connected to B may alternatively be that A is directly connected to C, C is directly connected to B, A and B are connected through C. In some scenarios, "connection" may alternatively be understood as coupling, for example, electromagnetic coupling between two inductors. In conclusion, the connection between A and B enables transmission of electric energy between A and B.

An autonomous driving simulation test is a test on an algorithm of an autonomous driving planning and control system. In the test, a computing device is used to construct a simulation traffic scenario, and a simulation traveling test is carried out in the simulation traffic scenario, to discover a weakness of the algorithm of the autonomous driving planning and control system and iterate or update the algorithm.

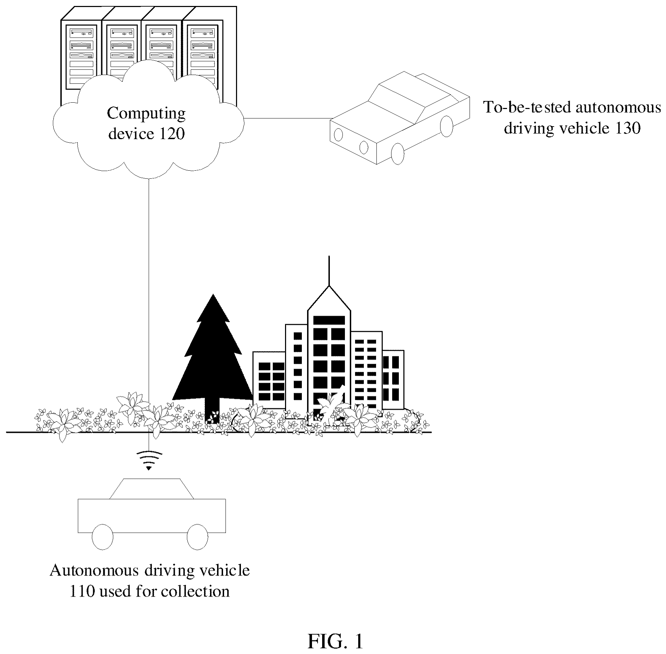

FIG. 1 is a diagram of an application scenario of an autonomous driving simulation test according to an embodiment of this application. The scenario mainly includes an autonomous driving vehicle 110 used for collection, a computing device 120, and a to-be-tested autonomous driving vehicle 130. The autonomous driving vehicle 110 used for collection may be a to-be-tested autonomous driving vehicle 130, or may be another autonomous driving vehicle, for example, a crowdsourced autonomous driving vehicle. This is not specifically limited. The computing device 120 may be any device having a processing capability, such as a personal computer, a server, a vehicle-mounted mobile terminal, an industrial computer, or an embedded device. In FIG. 1, an example in which the computing device 120 is a server is used for description. The server is connected to the autonomous driving vehicle 110 used for collection and the to-be-tested autonomous driving vehicle 130, and is configured to: obtain road test data collected when the autonomous driving vehicle 110 used for collection carries out a traveling test on a real road, construct a simulation traffic scenario based on the road test data, and input the simulation traffic scenario into a simulator, to test use effect of an algorithm of an autonomous driving planning and control system deployed in the to-be-tested autonomous driving vehicle 130, so that a developer further optimizes the algorithm of the autonomous driving planning and control system based on the use effect.

To ensure authenticity of the constructed simulation traffic scenario, a key issue is modeling of a dynamic obstacle in the simulation traffic scenario. The dynamic obstacle is a movable object that appears on a road, and includes a motor vehicle, a non-motor vehicle, a pedestrian, and the like. For modeling of a dynamic obstacle, the industry generally proposes the following requirements: authenticity, interactivity, diversity, and controllability. However, a current modeling manner provided by the industry usually cannot satisfy these requirements well. Details are as follows.

In some embodiments, the industry proposes a modeling manner for reproducing a real road test scenario. In this manner, an autonomous driving vehicle is first used to collect and record road test data; then key traffic scenario information is extracted from the road test data; and further, a simulation traffic scenario for playback is constructed based on the key traffic scenario information, the constructed simulation traffic scenario is loaded into a simulator, and an interaction test with an algorithm of an autonomous driving planning and control system deployed in a to-be-tested autonomous driving vehicle is carried out. An advantage of this solution is that an algorithm is simple, and the simulation traffic scenario is completely derived from the road test data, so that there is a most real initial triggering condition. However, the solution also has a great limitation. For example, at least a plurality of road tests need to be carried out to obtain sufficient road test data because data used in the solution is completely derived from a road test, but the road test is costly. Consequently, when data obtaining costs are limited, road test data obtained in the solution is definitely insufficient. This greatly limits diversity of the simulation traffic scenario. In addition, in the method, when the simulation traffic scenario for playback is constructed, a dynamic obstacle other than the to-be-tested autonomous driving vehicle completely depends on historical playback data recorded during a road test. However, in this manner, the dynamic obstacle has no interactive capability, and cannot properly respond to a change in the autonomous driving planning and control system. This reduces authenticity of the simulation traffic scenario to some extent.

To resolve a defect existing in the foregoing modeling manner, the industry further proposes an interactive modeling manner. In this manner, when a simulation traffic scenario is constructed, for each dynamic obstacle other than a to-be-tested vehicle, a similarity matching manner is used to search a preset behavior model library for an interactive behavior model that best matches historical trajectory information of the dynamic obstacle, and the dynamic obstacle is controlled by the best matching interactive behavior model, so that the dynamic obstacle can respond to a change in an autonomous driving planning and control system, to achieve interactivity of the simulation traffic scenario. However, this modeling manner also has some disadvantages. For example, similar to the foregoing modeling manner, data used in this modeling manner is also completely derived from a road test. When data obtaining costs are limited, road test data obtained in the modeling manner is also insufficient. This also limits diversity of the simulation traffic scenario. In addition, in this modeling manner, replacement with interactive behavior is performed only for a dynamic obstacle in an original traffic scenario. In this case, the generated simulation traffic scenario completely depends on the original traffic scenario, and a new traffic scenario cannot be constructed based on the original traffic scenario. This also greatly limits diversity of the generated simulation traffic scenario.

In conclusion, an existing modeling manner proposed by the industry generally has the following disadvantages: 1. Data used to generate a simulation traffic scenario is completely derived from a road test. When data obtaining costs are limited, the existing modeling manner can generate only a small quantity of simulation traffic scenarios. This cannot satisfy a requirement on diversity of an autonomous driving simulation test. 2. In an autonomous driving simulation test, targeted generation usually needs to be performed for some specific scenarios, to satisfy test requirements in some specific scenarios. However, the existing modeling manner can only reproduce an original traffic scenario, but cannot generate a targeted scenario for these specific scenarios. This cannot satisfy a requirement on controllability of the autonomous driving simulation test.

In view of this, embodiments of this application provide a method for generating an autonomous driving simulation scenario based on two-layer generalization. In the method, an original traffic scenario is first generalized by using a traffic scenario generalization model, to obtain a new traffic scenario. Then, for the new traffic scenario and a target interaction type that needs micro generalization, micro interaction generalization is implemented by using a behavior model allocator. In addition, a dynamic obstacle after the micro interaction generalization is given interactive behavior, to obtain a large quantity of simulation traffic scenarios that can satisfy all of authenticity, diversity, interactivity, and controllability.

The following describes, by using specific embodiments of this application, how the foregoing technical problem is resolved. It should be noted that in the following descriptions, a computing device may be any device having a processing capability, for example, the computing device 120 shown in FIG. 1, may be another communication node, communication apparatus, or communication system that can support a computing device in implementing a required function, or may be a chip, a chip system, a circuit, a circuit system, or the like. This is not specifically limited.

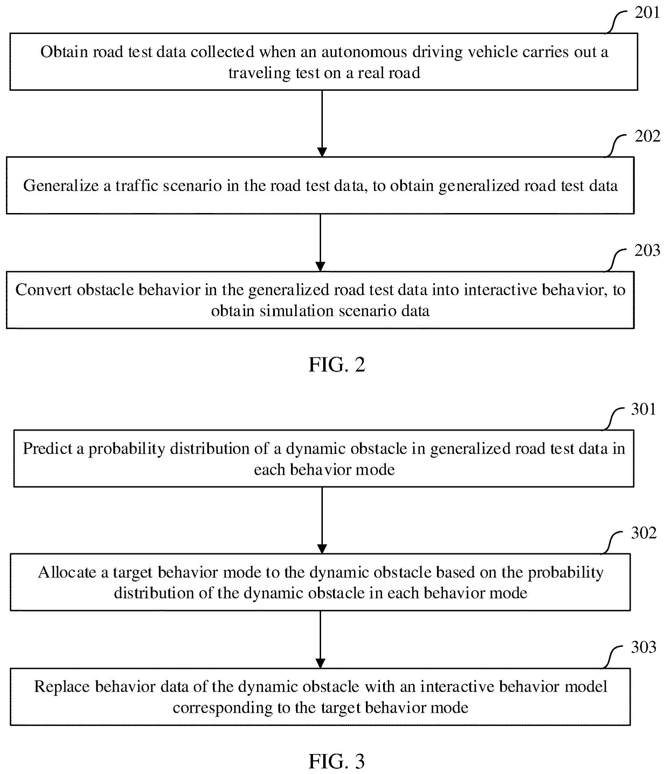

FIG. 2 is a schematic flowchart of an example of a method for generating simulation scenario data according to an embodiment of this application. The method is applicable to a computing device, for example, the computing device 120 shown in FIG. 1. As shown in FIG. 2, the method includes the following steps.

Step 201: The computing device obtains road test data collected when an autonomous driving vehicle carries out a traveling test on a real road.

The road test data may include sensing information obtained by a sensing system in the autonomous driving vehicle during a period in which the autonomous driving vehicle carries out the traveling test on the real road. The sensing test system, also referred to as a sensing system, includes a sensor device such as a radar or a camera, and is configured to sense an external environment of the autonomous driving vehicle, to generate sensing information. The radar can use a radio signal to sense information such as a speed, a forward direction, or a location of an object other than the autonomous driving vehicle. The camera may be a static camera or a video camera, may be a visible light camera or an infrared camera, or may be a common camera or a wide-angle camera. The camera may capture an image of a surrounding environment of the autonomous driving vehicle, and then send the image to a computer vision system in the autonomous driving vehicle for analysis, to sense information such as a shape, a type, a speed, or a location of an object other than the autonomous driving vehicle. The object may include a motor vehicle or a non-motor vehicle other than the autonomous driving vehicle, a pedestrian, a traffic signal light, a construction device, a building, or the like.

In some embodiments, the road test data may further include geographical location information obtained by a positioning system in the autonomous driving vehicle during the period in which the autonomous driving vehicle carries out the traveling test on the real road. The positioning system may be any system that can implement vehicle positioning, for example, a global positioning system (global positioning system, GPS), an assisted global positioning system (assisted global positioning system, AGPS), a BeiDou navigation satellite system (BeiDou navigation satellite system, BDS), a global navigation satellite system, a base station positioning system, or a wireless network (wireless, Wi-Fi) positioning system.

In some embodiments, the road test data may further include some status information of the autonomous driving vehicle during the period in which the autonomous driving vehicle carries out the traveling test on the real road, for example, a traveling speed, a forward direction, a traveling acceleration, a motor rotation speed, and brake pedal opening of the autonomous driving vehicle. The status information may be collected by status sensors deployed in the autonomous driving vehicle. These status sensors may include an inertial measurement unit (inertial measurement unit, IMU), a location sensor, a speed and acceleration sensor, a motor sensor, and the like.

It should be noted that the foregoing content is merely an example for describing content included in the road test data. The road test data may include more or less information than that in the foregoing example, or may include information different from that in the foregoing example. For example, in some other embodiments, the road test data may further include driving state information of the autonomous driving vehicle during the period in which the autonomous driving vehicle carries out the traveling test on the real road, for example, an autonomous driving state, a manual driving state, or an autonomous emergency braking state, and may even include time information of switching of the autonomous driving vehicle between different driving states. For specific information included in the road test data, refer to descriptions of road test data obtained in a road test on a vehicle in a conventional technology. Details are not described in embodiments of this application.

Step 202: The computing device generalizes a traffic scenario in the road test data, to obtain generalized road test data.

In detail, generalization is an extension manner, and means that specific and individual content is extended to general and more content. The computing device generalizing the traffic scenario in the road test data means that the computing device changes road topology and/or a status of a dynamic obstacle in an original traffic scenario, for example, increases or decreases a vehicle flow density in the original traffic scenario, increases or decreases traveling speeds of one or more vehicles in the original traffic scenario, increases or decreases a pedestrian density in the original traffic scenario, increases or decreases walking speeds of one or more pedestrians in the original traffic scenario, changes a quantity of lanes and a lane direction in the original traffic scenario, or changes a quantity of viaduct layers in the original traffic scenario. Theoretically, an infinite quantity of new traffic scenarios may be obtained through generalization. There is a change in road topology and/or a dynamic obstacle in each new traffic scenario, and other information remains consistent with that in the original traffic scenario. It can be learned that, generalizing the traffic scenario in the road test data can obtain, through extension, more new traffic scenarios while authenticity of the road test data is maintained as much as possible, and there is no need to carry out a plurality of real road tests. This helps obtain sufficient diversified road test data under limited data obtaining costs, and therefore helps generate sufficient diversified simulation traffic scenarios.

In some embodiments, the computing device may further obtain a traffic scenario generalization condition from a user before generalizing the traffic scenario, and then generalizes the traffic scenario in the road test data based on the traffic scenario generalization condition in a targeted manner, to obtain road test data corresponding to a new traffic scenario obtained through generalization. The traffic scenario generalization condition includes information about road topology and/or a dynamic obstacle, for example, may include but is not limited to at least one of the following: road topology, a vehicle flow density, a vehicle speed, a pedestrian density, a pedestrian walking speed, or the like. For example, when the traffic scenario generalization condition includes vehicle-related information such as a vehicle flow density and/or a vehicle speed, the computing device may change a vehicle flow and a vehicle speed in the original traffic scenario to a new vehicle flow and a new vehicle speed that are specified by the user, to obtain, through extension under an architecture of the original traffic scenario, a scenario with a new vehicle flow that satisfies a requirement of the user, and traffic information other than the new vehicle flow remains unchanged. In this case, providing, to the user, a traffic scenario generalization parameter that can be input can help the user input a required traffic scenario generalization condition according to an actual requirement of the user, to generate a simulation scenario through generalization for a traffic scenario required by the user, so that controllability of a traffic scenario generalization process is ensured.

It should be noted that the traffic scenario generalization condition may be provided to the computing device in a plurality of manners. For example, in an example, a user interface may be preconfigured on the computing device, and a developer directly enters, in the user interface, the traffic scenario generalization condition required by the user. For another example, in another example, the user may input, on user equipment, the required traffic scenario generalization condition, and then the traffic scenario generalization condition is sent to the computing device through interaction between the user equipment and the computing device. There are many other possible implementations, which are not described one by one herein.

Further, in this embodiment, after obtaining the traffic scenario generalization condition from the user and the road test data from the autonomous driving vehicle, the computing device may input the traffic scenario generalization condition and the road test data into a preset traffic scenario generalization model. After the traffic scenario generalization model generalizes traffic scenario information in the road test data based on the traffic scenario generalization condition, an output of the traffic scenario generalization model is read, to obtain the generalized road test data. The preset traffic scenario generalization model may be obtained by training massive road test data by using a machine learning algorithm, for example, may be obtained by training the massive road test data by the computing device, or may be obtained by training the massive road test data by another device and then sent to the computing device. The massive road test data may include historical road test data collected when a historical autonomous driving vehicle carries out a traveling test on a real road, may include road test data collected when a non-autonomous driving vehicle travels on a real road, or may include road test data that is of an autonomous driving vehicle or a non-autonomous driving vehicle and that is obtained from a third-party device. This is not specifically limited.

An example in which the traffic scenario generalization model is obtained by training the historical road test data by the computing device is used. In a specific training manner, the computing device may first interact with the historical autonomous driving vehicle to obtain the historical road test data collected when the historical autonomous driving vehicle carries out the traveling test on the real road, then extract, from the historical road test data by using an interaction type between the autonomous driving vehicle and a dynamic obstacle as a reference, a traffic scenario feature corresponding to each interaction type, and further, train an initial generation model based on the traffic scenario feature corresponding to each interaction type, to obtain the traffic scenario generalization model. The initial generation model may be, for example, a diffusion model (diffusion model, DM), a conditional variational autoencoder (conditional variational autoencoder, CVAE), a conditional generative adversarial net (conditional generative adversarial net, CGAN), or another similar model. The traffic scenario feature corresponding to each interaction type represents a road feature presented when the interaction type occurs between the autonomous driving vehicle and a dynamic obstacle, for example, may include road topology, a historical trajectory and a posture of the dynamic obstacle such as a vehicle flow and a pedestrian flow, and the like presented when the interaction type occurs.

As described above, an interaction type between the autonomous driving vehicle and a dynamic obstacle is a type of interaction between the autonomous driving vehicle and the dynamic obstacle. When the dynamic obstacle is a vehicle other than the autonomous driving vehicle, the interaction type may include but is not limited to vehicle following, vehicle cut-in, merging from a ramp, vehicle collision, or the like. The interaction of vehicle following means that a vehicle is located behind another vehicle in a same lane and follows the another vehicle. The interaction of vehicle cut-in means that a vehicle merges from a lane into another lane in which another vehicle is located. The interaction of merging from a ramp means that a vehicle merges from a ramp into a lane in which another vehicle is located. The interaction of vehicle collision means that two vehicles collide. When the dynamic obstacle is a pedestrian, the interaction type may include but is not limited to waiting for passage, passing first, or the like. The interaction of waiting for passage means that the pedestrian waits for the autonomous driving vehicle to pass before crossing a road. The interaction of passing first means that the pedestrian crosses a road before the autonomous driving vehicle.

With the use of the traffic scenario generalization model trained in the foregoing manner, in a specific traffic scenario generalization manner, after obtaining the road test data from the autonomous driving vehicle, the computing device may first slice the road test data by using an interaction type between the autonomous driving vehicle and a dynamic obstacle as a reference, to obtain at least one time slice and ensure that each time slice includes all road test data corresponding to at least one interaction type. Then, for each time slice, the computing device may extract, from the time slice, a traffic scenario feature that is of the original traffic scenario and that corresponds to the time slice, for example, road topology and a historical trajectory and a posture of a dynamic obstacle such as a vehicle flow and a pedestrian flow in the original traffic scenario. Further, the computing device may input, into the traffic scenario generalization model, the extracted traffic scenario feature of each time slice and the traffic scenario generalization condition input by the user. After the traffic scenario generalization model generalizes the traffic scenario feature of each time slice such as the road topology, the vehicle flow, or the pedestrian flow based on the traffic scenario generalization condition, a generalized traffic scenario feature that corresponds to each time slice and that is output by the traffic scenario generalization model is obtained. The generalized traffic scenario feature corresponding to each time slice includes a dynamic obstacle implementing an interaction type corresponding to the time slice and one or more other dynamic obstacles.

For ease of understanding, the following uses a specific example in which a dynamic obstacle is a vehicle for description. In this example, it is assumed that the computing device obtains road test data of 2 hours; in the 1^{st} hour, in the road test data, 70 vehicles pass, and the interaction of vehicle following exists between one vehicle and the autonomous driving vehicle; in the 2^{nd} hour, in the road test data, 100 vehicles pass, and the interaction of vehicle cut-in exists between one vehicle and the autonomous driving vehicle; and the traffic scenario generalization condition input by the user is a vehicle flow of 80 to 90 vehicles per hour.

First, the computing device divides the entire road test data into two time slices by using an interaction type between another vehicle and the autonomous driving vehicle as a reference. A 1^{st} time slice includes road test data of the 1^{st} hour, and a 2^{nd} time slice includes road test data of the 2^{nd} hour.

Then, for the 1^{st} time slice, the computing device extracts, from the road test data of the 1^{st} hour, information such as road topology and a historical trajectory and a posture of a vehicle flow and a pedestrian flow, and then inputs, into the traffic scenario generalization model, the information and the condition of the vehicle flow of 80 to 90 vehicles per hour input by the user. The traffic scenario generalization model changes the quantity of the 70 vehicles in the road test data of the 1^{st} hour based on the vehicle flow of 80 to 90 vehicles per hour that is specified by the user, and ensures that the interaction of vehicle following exists between at least one vehicle in changed vehicles and the autonomous driving vehicle, to obtain a part of generalized road test data. For example, the traffic scenario generalization model changes data of the passed vehicles in the road test data of the 1^{st} hour to 80 vehicles, and configures the interaction of vehicle following to exist between one vehicle in the 80 vehicles and the autonomous driving vehicle, to obtain a 1^{st} piece of generalized road test data; changes the data of the passed vehicles in the road test data of the 1^{st} hour to 81 vehicles, and configures the interaction of vehicle following to exist between one vehicle in the 81 vehicles and the autonomous driving vehicle, to obtain a 2^{nd} piece of generalized road test data; ...; and changes the data of the passed vehicles in the road test data of the 1^{st} hour to 90 vehicles, and configures the interaction of vehicle following to exist between one vehicle in the 90 vehicles and the autonomous driving vehicle, to obtain an 11^{th} piece of generalized road test data.

Similarly, for the 2^{nd} time slice, the computing device extracts, from the road test data of the 2^{nd} hour, information such as road topology and a historical trajectory and a posture of a vehicle flow and a pedestrian flow, and then inputs, into the traffic scenario generalization model, the information and the condition of the vehicle flow of 80 to 90 vehicles per hour input by the user. The traffic scenario generalization model changes the quantity of the 70 vehicles in the road test data of the 2^{nd} hour based on the vehicle flow of 80 to 90 vehicles per hour that is specified by the user, and ensures that the interaction of vehicle cut-in exists between at least one vehicle in changed vehicles and the autonomous driving vehicle, to obtain another part of generalized road test data. For example, the traffic scenario generalization model changes data of the passed vehicles in the road test data of the 2^{nd} hour to 80 vehicles, and configures the interaction of vehicle cut-in to exist between one vehicle in the 80 vehicles and the autonomous driving vehicle, to obtain a 12^{th} piece of generalized road test data; changes the data of the passed vehicles in the road test data of the 2^{nd} hour to 81 vehicles, and configures the interaction of vehicle cut-in to exist between one vehicle in the 81 vehicles and the autonomous driving vehicle, to obtain a 13^{th} piece of generalized road test data; ...; and changes the data of the passed vehicles in the road test data of the 2^{nd} hour to 90 vehicles, and configures the interaction of vehicle cut-in to exist between one vehicle in the 90 vehicles and the autonomous driving vehicle, to obtain a 22^{nd} piece of generalized road test data.

Finally, the computing device reads an output of the traffic scenario generalization model, to obtain 11 pieces of road test data obtained through generalization for the 1^{st} time slice and 11 pieces of road test data obtained through generalization for the 2^{nd} time slice. It can be learned that, after the computing device generalizes vehicle flows in the original road test data based on the vehicle flow specified by the user, 22 pieces of generalized road test data are obtained, so that a quantity and diversity of road test data is greatly increased.

It should be noted that the foregoing example is merely used to briefly describe how to generalize the traffic scenario in the road test data, and an actual generalization procedure may be partially different from the foregoing example. For example, in some generalization procedures, it may be further ensured that a same interaction type exists between two or more vehicles in changed vehicles and the autonomous driving vehicle when a quantity of vehicles is changed, to obtain more generalized road test data. For another example, in some other generalization procedures, some other content such as a pedestrian, a signal light, or roadblock facilities may be further added when a quantity of vehicles is changed, and information such as a model, a brand, a size, a type, a driver, and a color of a vehicle may be synchronously changed, to further improve richness of scenarios of the generalized road test data. It should be understood that there are many possible generalization procedures, which are not described one by one in embodiments of this application.

In addition, to prevent the traffic scenario generalization model from infinitely generalizing the traffic scenario, a generalization quantity threshold may be further configured in the traffic scenario generalization model. In a generalization process, once the traffic scenario generalization model determines that a quantity of generalized traffic scenarios reaches the generalization quantity threshold, generalization may be ended, to save processing resources of the computing device. The generalization quantity threshold may be a fixed threshold that is preconfigured in the traffic scenario generalization model, or may be a variable threshold that is input by the user when the user inputs the traffic scenario generalization condition. This is not specifically limited.

Step 203: The computing device converts obstacle behavior in the generalized road test data into interactive behavior, to obtain simulation scenario data.

In some embodiments, it is considered that only a dynamic obstacle that is close to the autonomous driving vehicle may interact with the autonomous driving vehicle, and a dynamic obstacle that is far from the autonomous driving vehicle has a high probability of not interacting with the autonomous driving vehicle in an entire traveling process. Therefore, during implementation, the computing device may alternatively convert only behavior of a dynamic obstacle located around the autonomous driving vehicle in the generalized road test data into interactive behavior, and conversion into interactive behavior is not performed for a dynamic obstacle that is far from the autonomous driving vehicle. In this way, it can be ensured that a dynamic obstacle having a high probability of interacting with the autonomous driving vehicle has an interactive attribute in a simulation traffic scenario, and processing on a dynamic obstacle having a low or even no probability of interacting with the autonomous driving vehicle can be avoided. This helps save processing resources and improve efficiency in generating a simulation traffic scenario.

The obstacle behavior is also referred to as a behavior mode of an obstacle, represents a traveling manner of a dynamic obstacle on a road, and may include one or more of the following: leftward lane change, rightward lane change, lane keeping, smooth merging, aggressive merging, or the like.

As described above, in the generalized road test data, a movement trajectory of a dynamic obstacle is fixed. If the generalized road test data is directly input into a simulator, the dynamic obstacle can only travel along the fixed movement trajectory. Even if a traveling trajectory of an autonomous driving vehicle is changed during a test to make the vehicle interact with the dynamic obstacle, the dynamic obstacle cannot change with the movement trajectory of the autonomous driving vehicle. In other words, the dynamic obstacle has no capability of interacting with the autonomous driving vehicle.

To resolve the foregoing problem, in an optional implementation, a behavior model library may be preconfigured in the computing device. The behavior model library includes interactive behavior models corresponding to various behavior modes, and an interactive behavior model corresponding to each behavior mode is used to plan a future traveling status in the behavior mode in real time based on a status of a surrounding environment. During implementation, for any dynamic obstacle for which an interactive capability needs to be configured, the computing device may first predict, based on the generalized road test data, a target behavior mode that the dynamic obstacle may have relative to the autonomous driving vehicle, and then obtain, from the interactive behavior model library, an interactive behavior model corresponding to the target behavior mode, to replace the dynamic obstacle in the generalized road test data, to obtain simulation scenario data. In this way, after the simulation scenario data obtained after replacement is input into the simulator, even if the dynamic obstacle is made to be in the foregoing possible target behavior mode because an original traveling trajectory of the autonomous driving vehicle is changed, the dynamic obstacle can still respond as expected in the target behavior mode, to accurately respond to a change in an autonomous driving planning and control system and achieve interactivity of an autonomous driving simulation test.

To implement the foregoing implementation, refer to FIG. 3. FIG. 3 is a schematic flowchart of a specific method for replacement with an interactive behavior model according to an embodiment of this application. The method is applicable to a computing device, for example, the computing device 120 shown in FIG. 1. The method includes the following steps.

Step 301: The computing device predicts a probability distribution of a dynamic obstacle in the generalized road test data in each behavior mode.

As described above, it is assumed that a type of interaction does not exist between the autonomous driving vehicle and any dynamic obstacle in the generalized road test data. If the autonomous driving vehicle is required to be in the type of interaction with a dynamic obstacle during a subsequent test, the type of interaction leads to a change in a movement trajectory of the autonomous driving vehicle, and further affects a movement trajectory of another dynamic obstacle in a current traffic scenario, and a behavior mode of the another dynamic obstacle is changed accordingly. It can be learned that a behavior mode to be presented by a dynamic obstacle in a test process actually depends on a target interaction type in which the autonomous driving vehicle is to be in the test process. Therefore, the computing device may predict, based on the target interaction type in which the autonomous driving vehicle is to be in the test process, a probability that each dynamic obstacle is in each behavior mode, to allocate, to each dynamic obstacle in advance, an interactive capability corresponding to a possible behavior mode in which the dynamic obstacle is to be.

In a specific implementation, the computing device may first obtain the target interaction type in which the autonomous driving vehicle is to be in the test process, and then input the target interaction type and the generalized road test data into a behavior model allocator. The behavior model allocator predicts a probability that each dynamic obstacle is in each behavior mode after the autonomous driving vehicle is in the target interaction type. The computing device reads an output of the behavior model allocator, to learn of a probability that each dynamic obstacle in the current traffic scenario is correspondingly in each behavior mode when the autonomous driving vehicle is in the target interaction type. The target interaction type may be obtained by the computing device from the simulator, may be preconfigured in the computing device by a tester, or may be specified by the user in real time. An example in which the user specifies the target interaction type is used. There are many specifying manners. For example, a user interface may be preconfigured in the computing device, and the user inputs an interaction type generalization condition in the user interface, to notify the computing device of the specified target interaction type. Alternatively, the user may input an interaction type generalization condition on user equipment, and the target interaction type is transmitted to the computing device through communication interaction between the user equipment and the computing device, or the like. A selectable interaction type generalization condition is provided to the user, so that a corresponding behavior model can be adaptively allocated to each dynamic obstacle in a simulation scenario based on the target interaction type specified by the user, to generate a simulation traffic scenario through generalization for the target interaction type specified by the user. This ensures authenticity of the simulation traffic scenario and improves controllability of an interaction type generalization process.

The behavior model allocator may be obtained in a manner based on a rule or based on data driven. When the manner based on a rule is used for obtaining, a related rule algorithm may be written in advance by a professional skilled person and stored in the computing device. When the manner based on data driven is used for obtaining, massive road test data may be collected by using the Internet or other related software, and the road test data is analyzed, to determine an interaction type and a behavior mode of a dynamic obstacle in an original road test scenario. Further, a probability distribution that is of a dynamic obstacle in an unknown traffic scenario under a corresponding interaction type and that is in each behavior mode is learned based on the information, and a target behavior mode is allocated to the dynamic obstacle in the unknown traffic scenario based on the probability distribution. The behavior model allocator may be obtained by training the massive road test data by the computing device, or may be obtained by training the massive road test data by another device and then sent to the computing device. The massive road test data may include historical road test data collected when a historical autonomous driving vehicle carries out a traveling test on a real road, may include road test data collected when a non-autonomous driving vehicle travels on a real road, or may include road test data that is of an autonomous driving vehicle or a non-autonomous driving vehicle and that is obtained from a third-party device. This is not specifically limited.

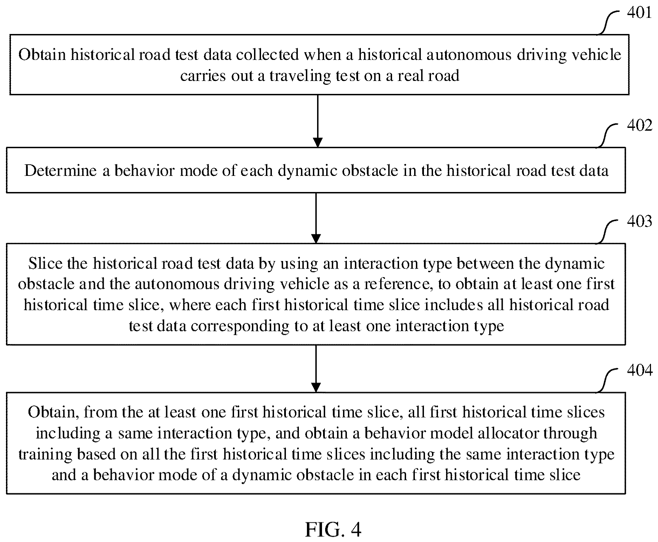

An example in which the behavior model allocator is obtained by training the historical road test data by the computing device is used. FIG. 4 is a schematic flowchart of a specific method for training a behavior model allocator according to an embodiment of this application. The method is applicable to a computing device, for example, the computing device 120 shown in FIG. 1. The method includes the following steps.

Step 401: The computing device obtains historical road test data collected when a historical autonomous driving vehicle carries out a traveling test on a real road.

Step 402: The computing device determines a behavior mode of each dynamic obstacle in the historical road test data.

In some embodiments, the computing device may mark the behavior mode of each dynamic obstacle on the historical road test data. For example, manual marking may be performed by manually operating the computing device, or the computing device may perform automatic marking based on a rule, machine learning, or the like.

Specifically, before automatic marking is performed based on a rule, a developer may first write corresponding rule algorithms. These rule algorithms include but are not limited to the following: If a vehicle frequently changes a lane during driving, a behavior mode of the vehicle is marked as an aggressive mode; if a vehicle changes a lane with caution during driving, a behavior mode of the vehicle is marked as a smooth mode; if a vehicle always keeps a lane during driving, a behavior mode of the vehicle is marked as lane keeping; if a vehicle changes from a current lane to a left lane, a behavior mode of the vehicle is marked as leftward lane change; if a vehicle changes from a current lane to a right lane, a behavior mode of the vehicle is marked as rightward lane change; if a vehicle merges leftward from a ramp into a main lane, a behavior mode of the vehicle is marked as merging leftward into a main lane; if a vehicle merges rightward from a ramp into a main lane, a behavior mode of the vehicle is marked as merging rightward into a main lane; if a vehicle merges leftward from a current lane into a ramp, a behavior mode of the vehicle is marked as merging leftward into a ramp; if a vehicle merges rightward from a current lane into a ramp, a behavior mode of the vehicle is marked as merging rightward into a ramp; if a pedestrian waits for a vehicle to pass, a behavior mode of the pedestrian is marked as a smooth walking mode; and if a pedestrian passes before a vehicle passes, a behavior mode of the pedestrian is marked as an aggressive walking mode.

Specifically, before automatic marking is performed based on machine learning, the computing device may first train a clustering algorithm by using massive road test data. The clustering algorithm may be an unsupervised clustering algorithm, a hierarchical clustering algorithm, a clustering algorithm based on a neural network model, or the like. The clustering algorithm can perform clustering on dynamic obstacles having a same behavior mode, to analyze a behavior mode to which a dynamic obstacle having an unknown behavior mode belongs.

It should be noted that the foregoing content merely describes examples of several marking methods, and another marking manner may be used in another embodiment, provided that a behavior mode of a dynamic obstacle can be marked at specific accuracy. This is not specifically limited in embodiments of this application.

Step 403: The computing device slices the historical road test data by using an interaction type between the dynamic obstacle and the autonomous driving vehicle as a reference, to obtain at least one first historical time slice, where each first historical time slice includes all historical road test data corresponding to at least one interaction type.

The interaction type may be at least one of the following: merging from a ramp, vehicle cut-in, vehicle following, or collision interaction.

For example, it is assumed that the computing device obtains historical road test data of 5 hours; in the first 0.5 hour, the historical road test data shows that a vehicle merges from a ramp into a lane in which the autonomous driving vehicle is located; in the next 3 hours, the historical road test data shows that a vehicle always follows behind the autonomous driving vehicle; and in the last 1.5 hours, the historical road test data shows that a vehicle travels from a left lane of the autonomous driving vehicle into the lane in which the autonomous driving vehicle is located. In this case, the computing device may divide the entire historical road test data into three first historical time slices by using an interaction type between another vehicle and the autonomous driving vehicle as a reference. A 1^{st} first historical time slice includes historical road test data of the first 0.5 hour, a 2^{nd} first historical time slice includes historical road test data of the next 3 hours, and a 3^{rd} first historical time slice includes historical road test data of the last 1.5 hours.

Step 404: The computing device obtains, from the at least one first historical time slice, all first historical time slices including a same interaction type, and obtains the behavior model allocator through training based on all the first historical time slices including the same interaction type and a behavior mode of a dynamic obstacle in each first historical time slice.

In some embodiments, after obtaining the historical road test data, the computing device may mark the behavior mode of each dynamic obstacle on the historical road test data, and after slicing the historical road test data to obtain each first historical time slice, the computing device may further mark a corresponding interaction type on each first historical time slice. In this case, each first historical time slice is marked with both an interaction type corresponding to the first historical time slice and a behavior mode of each dynamic obstacle in the first historical time slice.

Further, the computing device may find, from each first historical time slice based on the interaction type marked on each first historical time slice, all first historical time slices marked with a same interaction type, then train all the first historical time slices with the interaction type by using a preset model allocator training algorithm, to extract a probability distribution feature of a dynamic obstacle implementing each marked behavior mode under the interaction type, and further, obtain the behavior model allocator through training based on a probability distribution feature of the dynamic obstacle implementing each marked behavior mode under each interaction type. The model allocator training algorithm may be any statistical or non-statistical algorithm that can be used to obtain a probability model through training, for example, a maximum likelihood estimation algorithm, a least squares probability classification algorithm, or a linear regression analysis model algorithm.

In the training manner shown in FIG. 4, the behavior model allocator is trained by using real road test data such as the historical road test data, so that the behavior model allocator can also have a good capability of predicting similar road test data. In addition, each first historical time slice corresponding to each interaction type is centrally analyzed in a targeted manner, so that the behavior model allocator covers a probability distribution feature in each behavior mode corresponding to each interaction type. In this way, a probability of a dynamic obstacle in each behavior mode corresponding to each interaction type can be accurately predicted, thereby helping improve effect of making behavior of the dynamic obstacle interactive.

Further, with the use of the behavior model allocator trained in the foregoing manner, in a specific behavior model allocation manner, in addition to obtaining the generalized road test data, the computing device may obtain the interaction type generalization condition from the user, obtain, from the interaction type generalization condition, the target interaction type specified by the user, and input the generalized road test data and the target interaction type into the behavior model allocator. After the behavior model allocator predicts a probability distribution of each dynamic obstacle in the generalized road test data being correspondingly in each behavior mode after the autonomous driving vehicle is in the target interaction type, an output of the behavior model allocator is read, to learn of a probability distribution of each dynamic obstacle in each behavior mode corresponding to the target interaction type.

Step 302: The computing device allocates a target behavior mode to the dynamic obstacle based on the probability distribution of the dynamic obstacle in each behavior mode.

Specifically, after obtaining the probability distribution of the dynamic obstacle being correspondingly in each behavior mode after the autonomous driving vehicle is in the target interaction type, the computing device may select, according to a preset rule, one or more behavior modes with a high occurrence probability as the target behavior mode corresponding to the dynamic obstacle. The preset rule may be set by a person skilled in the art based on experience. For example, a behavior mode with a highest occurrence probability in the probability distribution may be used as the target behavior mode, or a behavior mode may be randomly selected, as the target behavior mode, from all behavior modes with an occurrence probability exceeding a threshold probability (for example, 50%), or all behavior modes with an occurrence probability exceeding a threshold probability (for example, 80%) may be used as the target behavior mode, or the like. There are many possible rules, which are not described one by one herein.

For ease of understanding, the following still uses the example in step 202 for description. In this example, the computing device generalizes the traffic scenario in the real road test data to obtain the 22 pieces of generalized road test data. The 1^{st} piece of generalized road test data is used as an example. It is assumed that the target interaction type input by the user is vehicle cut-in, and the preset rule is selecting a behavior mode with a highest occurrence probability as the target behavior mode.

In this case, after the computing device inputs the generalized road test data and the interaction type of vehicle cut-in into the behavior model allocator, for each vehicle in the 80 vehicles in the generalized road test data, the behavior model allocator predicts a probability that the vehicle is in each behavior mode after the autonomous driving vehicle performs the vehicle cut-in. The computing device reads an output of the behavior model allocator, to learn of a probability that each vehicle is in each behavior mode after the autonomous driving vehicle performs the vehicle cut-in.

It is assumed that a probability that a 1^{st} vehicle changes a lane rightward is 0.9, a probability that the vehicle changes a lane leftward is 0.8, a probability that the vehicle continues to keep a lane is 0.2, a probability that the vehicle merges leftward into a ramp is 0.1, and a probability that the vehicle merges rightward into a ramp is 0.06. In this case, a behavior mode with a highest occurrence probability is rightward lane change. Therefore, the computing device may use the rightward lane change as a target behavior mode corresponding to the 1^{st} vehicle.

It is assumed that a probability that a 2^{nd} vehicle changes a lane rightward is 0.1, a probability that the vehicle changes a lane leftward is 0.2, a probability that the vehicle continues to keep a lane is 0.95, a probability that the vehicle merges leftward into a ramp is 0.2, and a probability that the vehicle merges rightward into a ramp is 0.1. In this case, a behavior mode with a highest occurrence probability is lane keeping. Therefore, the computing device may use the lane keeping as a target behavior mode corresponding to the 2^{nd} vehicle.

**...**

It is assumed that a probability that an 80^{th} vehicle changes a lane rightward is 0.02, a probability that the vehicle changes a lane leftward is 0.8, a probability that the vehicle continues to keep a lane is 0.2, a probability that the vehicle merges leftward into a ramp is 0.9, and a probability that the vehicle merges rightward into a ramp is 0.12. In this case, a behavior mode with a highest occurrence probability is merging leftward into a ramp. Therefore, the computing device may use the merging leftward into a ramp as a target behavior mode corresponding to the 80^{th} vehicle.

Step 303: The computing device replaces behavior data of the dynamic obstacle with an interactive behavior model corresponding to the corresponding target behavior mode.

Specifically, the interactive behavior model may be an interactive behavior replacement algorithm prewritten by a person skilled in the art, may be obtained by introducing a model trained by using an additional machine learning algorithm such as generative adversarial imitation learning (generative adversarial imitation learning, GAIL), or may be a similar model that is stored in a third-party organization and that is obtained through interaction with the third-party organization. This is not specifically limited.

In an optional implementation, the interactive behavior model may be obtained by training massive road test data by using a machine learning algorithm, for example, may be obtained by training the massive road test data by the computing device, or may be obtained by training the massive road test data by another device and then sent to the computing device. The massive road test data may include historical road test data collected when a historical autonomous driving vehicle carries out a traveling test on a real road, may include road test data collected when a non-autonomous driving vehicle travels on a real road, or may include road test data that is of an autonomous driving vehicle or a non-autonomous driving vehicle and that is obtained from a third-party device. This is not specifically limited.

An example in which the interactive behavior model is obtained by training the historical road test data by the computing device is used. In a specific training manner, the computing device may first obtain the historical road test data collected when the historical autonomous driving vehicle carries out the traveling test on the real road, and then slice the historical road test data by using a dynamic obstacle as a reference, to obtain at least one second historical time slice, where each second historical time slice includes all historical road test data of at least one dynamic obstacle from start to end. Then, a behavior mode of the dynamic obstacle included in each second historical time slice is marked through manual marking, automatic marking, or the like, and second historical time slices marked with a same behavior mode are found based on the behavior mode marked on each second historical time slice. Further, imitative learning is performed on the second historical time slices marked with the same behavior mode, to summarize a movement trajectory feature of a dynamic obstacle in the behavior mode, to obtain an interactive behavior model corresponding to the behavior mode through training, and the behavior mode and the corresponding interactive behavior model are stored in a behavior model library. In this way, the road test data of each dynamic obstacle having the same behavior mode is centrally analyzed in a targeted manner, so that an interaction trajectory between a dynamic obstacle corresponding to each behavior mode and the autonomous driving vehicle can be extracted; and the interaction trajectory is used as an interactive behavior model corresponding to the behavior mode, so that a dynamic obstacle for which replacement with the interactive behavior model is performed has a capability of interacting with an autonomous driving vehicle. This helps achieve interactive effect of a dynamic obstacle in the simulation scenario data.

In the foregoing embodiments of this application, in a first-layer generalization operation, the traffic scenario in the real road test data is generalized, so that the real road test data can be extended to road test data having more traffic scenario types, and the road test data having more traffic scenario types can be used to generate more diversified simulation traffic scenarios. This ensures authenticity of the simulation traffic scenarios and improves diversity of the simulation traffic scenarios. Such diversity can be achieved through a data processing operation, with no need for a plurality of road tests. This further helps reduce an algorithm iteration cycle of the autonomous driving planning and control system and improve test efficiency and algorithm iteration efficiency of the autonomous driving planning and control system. In a second-layer generalization operation, the behavior model allocator is used to perform micro interaction type generalization on the road test data obtained in the first-layer generalization, and the obstacle behavior after the generalization is converted into the interactive behavior by using the behavior model library, so that these obstacles have a capability of interacting with an autonomous driving vehicle, and the generated simulation traffic scenarios respond to a change in an autonomous driving system in a generalized micro interaction type. This further improves the diversity of the simulation traffic scenarios and achieves interactivity of the simulation traffic scenarios. In addition, a controllable traffic scenario generalization condition and a controllable interaction type generalization condition are provided to the user, so that more simulation traffic scenarios can be obtained, through extension, based on an indication of the user in a targeted manner, and an interactive behavior model can be adaptively allocated to a dynamic obstacle in the simulation traffic scenario after the extension based on a micro interaction type indicated by the user, to achieve controllability of the simulation traffic scenarios. It can be learned that the method provided in embodiments of this application can achieve authenticity, diversity, interactivity, and controllability of an autonomous driving simulation test, and can satisfy all requirements of the industry on the autonomous driving simulation test well.

For ease of understanding, the following provides a systematic overview of the foregoing entire solution. In the overview, the entire solution may be divided into a model generation phase and a model use phase. The following describes the two phases in detail.

### Model generation phase

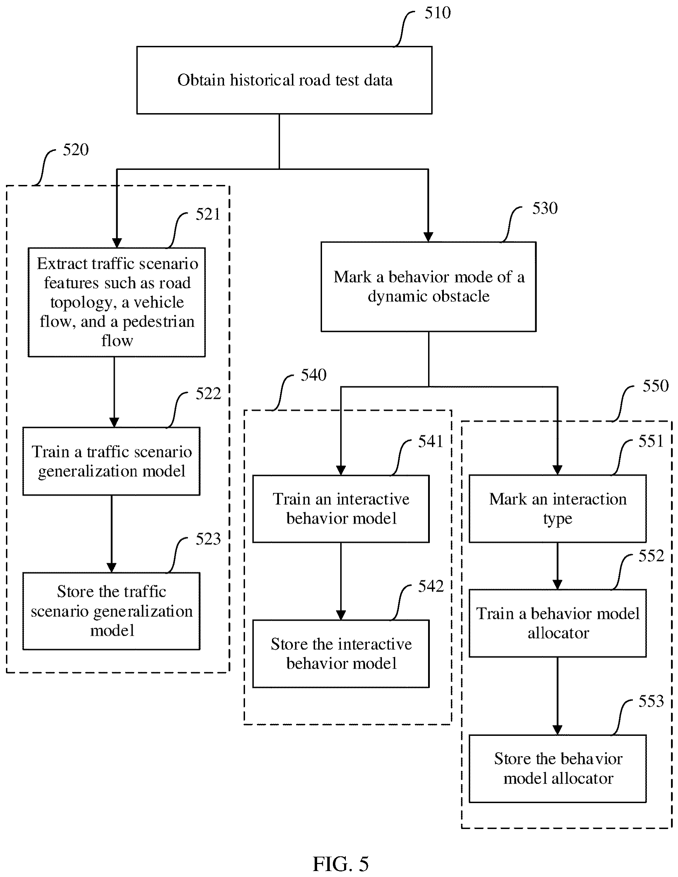

FIG. 5 is a schematic flowchart of a model generation phase according to an embodiment of this application. The procedure may be performed by any device having a computing capability. For example, a computing device may perform the procedure, or another device may perform the procedure and then send a generated model to the computing device. An example in which the computing device performs the procedure is used. The procedure specifically includes the following steps.

Step 510: The computing device obtains historical road test data, and then performs a first aspect or a second aspect in the following.

During implementation, the computing device may obtain, from a historical autonomous driving vehicle, historical road test data collected and recorded by the historical autonomous driving vehicle in a road test process, may obtain internal historical road test data of a third-party device such as a cloud server through interaction with the third-party device, may obtain, through an entrusted organization, historical road test data collected and recorded by a crowdsourced vehicle, or may obtain historical road test data through network search or through an interview with an experienced expert or scholar, or the like. This is not specifically limited.

In the first aspect, in step 520, the computing device trains a traffic scenario generalization model by using the historical road test data and stores the traffic scenario generalization model.

Specifically, step 520 may include step 521 to step 523.

Step 521: The computing device extracts traffic scenario features such as road topology, a vehicle flow, and a pedestrian flow from the historical road test data.

During implementation, the computing device may extract the road topology, a historical trajectory and a posture of a dynamic obstacle such as the vehicle flow and the pedestrian flow, and the like from the historical road test data.

Step 522: The computing device trains the traffic scenario generalization model by using the extracted traffic scenario features.

During implementation, the computing device may train the extracted traffic scenario features by using a machine learning algorithm, to obtain the traffic scenario generalization model. The machine learning algorithm may be a DM algorithm, a CVAE algorithm, a CGAN algorithm, or the like.

Step 523: The computing device stores the traffic scenario generalization model.

During implementation, the computing device may store, in a memory of the computing device, the traffic scenario generalization model obtained through training.

It should be noted that for specific implementations of step 521 to step 523, refer to related descriptions in step 202. Details are not described herein again.

In the second aspect, in step 530, the computing device marks a behavior mode of each dynamic obstacle included in the historical road test data, and then performs a first sub-aspect or a second sub-aspect in the following.

During implementation, the computing device may slice the historical road test data by using the dynamic obstacle as a reference, to obtain a plurality of second historical time slices, where each second historical time slice includes all historical road test data of at least one dynamic obstacle from start to end. Further, the computing device may mark the behavior mode of the dynamic obstacle included in the historical road test data based on movement behavior of the dynamic obstacle included in each second historical time slice through manual marking or through automatic marking based on a rule or a clustering algorithm.

It should be noted that two or more dynamic obstacles may exist in the historical road test data at a same time point. Therefore, two second historical time slices obtained by slicing the historical road test data may overlap. For example, a second historical time slice includes historical road test data of a 0^{th} minute to a 10^{th} minute, and another second historical time slice includes road test data of a 2^{nd} minute to a 15^{th} minute.

It should be noted that for specific implementations of step 530, refer to related descriptions in step 402. Details are not described herein again.

In the first sub-aspect, in step 540, the computing device trains an interactive behavior model by using the historical road test data marked with the behavior mode and stores the interactive behavior model.

Specifically, step 540 may include step 541 and step 542.

Step 541: The computing device trains the interactive behavior model based on the historical road test data marked with the behavior mode.

During implementation, the computing device may find, from the second historical time slices, all second historical time slices marked with a same behavior mode, then extract, based on all the second historical time slices marked with the same behavior mode, a behavior feature of a dynamic obstacle in the behavior mode, and further, obtain an interactive behavior model corresponding to the behavior mode through training based on the behavior feature.

Step 542: The computing device stores the interactive behavior model.

During implementation, a behavior model library is set in the computing device, and the computing device may store, in the behavior model library, an interactive behavior model that corresponds to each behavior mode and that is obtained through training.

It should be noted that for specific implementations of step 541 and step 542, refer to related descriptions in step 303. Details are not described herein again.

In the second implementation sub-aspect, in step 550, the computing device trains a behavior model allocator by using the historical road test data marked with the behavior mode and stores the behavior model allocator.

Specifically, step 550 may include step 551 to step 553.

Step 551: The computing device marks an interaction type on the historical road test data.

During implementation, the computing device may re-slice the historical road test data by using an interaction type between the dynamic obstacle and the autonomous driving vehicle as a reference, to obtain at least one first historical time slice, and mark a corresponding interaction type on each first historical time slice. Each first historical time slice includes all historical road test data corresponding to at least one interaction type.

Step 552: The computing device trains the behavior model allocator by using the historical road test data marked with the interaction type and the behavior mode.

During implementation, the computing device may find, from the at least one first historical time slice based on the interaction type marked on each first historical time slice, all first historical time slices marked with a same interaction type, then extract, based on all the first historical time slices marked with the same interaction type and a marked behavior mode of a dynamic obstacle in each first historical time slice, a probability distribution of a dynamic obstacle in each behavior mode corresponding to the interaction type, and further, obtain the behavior model allocator through training based on a probability distribution of the dynamic obstacle in each behavior mode corresponding to each interaction type.

Step 553: The computing device stores the behavior model allocator.

During implementation, the computing device may store, in a memory of the computing device, the behavior model allocator obtained through training.

It should be noted that for specific implementations of step 551 to step 553, refer to related descriptions in step 403 and step 404. Details are not described herein again.

In the model generation phase, the models are trained by using real road test data such as the historical road test data, so that the models can also have a good capability of generalizing or predicting similar road test data. This helps improve accuracy of subsequently generating simulation scenario data by using the models.

### Model use phase

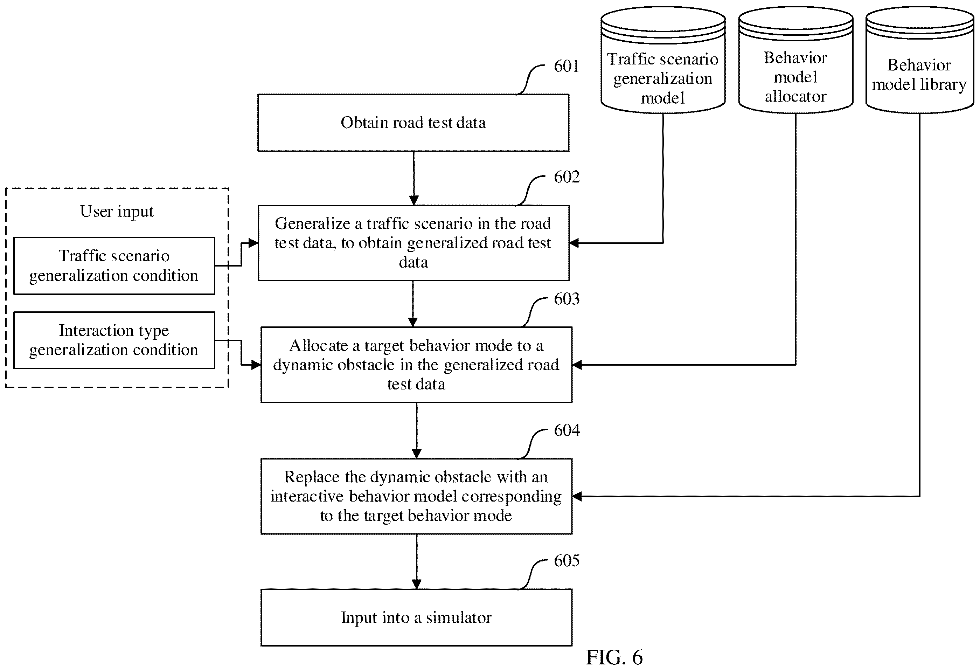

FIG. 6 is a schematic flowchart of a model use phase according to an embodiment of this application. The procedure may be performed by a computing device, for example, the computing device 120 in FIG. 1. The procedure specifically includes the following steps.

Step 601: The computing device obtains road test data.

During implementation, the computing device may obtain, from an autonomous driving vehicle, road test data collected and recorded by the autonomous driving vehicle in a road test process, may obtain internal road test data of a third-party device such as a cloud server through interaction with the third-party device, may obtain, through an entrusted organization, road test data collected and recorded by a crowdsourced vehicle, or may obtain road test data through network search or through an interview with an experienced expert or scholar, or the like. This is not specifically limited.

Step 602: The computing device invokes, based on a traffic scenario generalization condition input by a user, a traffic scenario generalization model stored in a memory to generalize a traffic scenario in the road test data, to obtain generalized road test data.

During implementation, the computing device may first slice the road test data by using an interaction type between a dynamic obstacle and the autonomous driving vehicle as a reference, to obtain at least one time slice, where each time slice includes road test data corresponding to at least one interaction type. Then, the computing device may input each time slice and the traffic scenario generalization condition input by the user into the traffic scenario generalization model, and the traffic scenario generalization model generalizes a traffic scenario in each time slice in a targeted manner based on the traffic scenario generalization condition indicated by the user, to obtain a series of generalized time slices.

Step 603: The computing device invokes, based on an interaction type generalization condition input by the user, a behavior model allocator stored in a memory to allocate a target behavior mode to a dynamic obstacle in the generalized road test data.

During implementation, the computing device may mark a behavior mode on each generalized time slice through manual marking, automatic marking, or the like, and then input, into the behavior model allocator, each generalized time slice marked with the behavior mode and the interaction type generalization condition input by the user. After the behavior model allocator predicts a probability distribution of a dynamic obstacle in each generalized time slice being in each behavior mode when the autonomous driving vehicle is in a target interaction type specified by the user, an output of the behavior model allocator is read, to learn of the probability distribution of the dynamic obstacle in each generalized time slice in each behavior mode corresponding to the target interaction type specified by the user, and a target behavior mode is allocated to the dynamic obstacle in each generalized time slice based on the probability distribution.

Step 604: The computing device searches a behavior model library for an interactive behavior model corresponding to the target behavior mode, and replaces the dynamic obstacle with the found interactive behavior model corresponding to the target behavior mode.

During implementation, for each generalized time slice, the computing device may search the behavior model library for an interactive behavior model corresponding to the target behavior mode allocated to the dynamic obstacle in the generalized time slice, and then replace the dynamic obstacle in the generalized time slice with the interactive behavior model, to obtain the simulation scenario data.

Step 605: The computing device inputs, into a simulator, road test data obtained after replacement with the interactive behavior model.

During implementation, the computing device may input, into the simulator, the simulation scenario data obtained after replacing the dynamic obstacle in each generalized time slice, to simulate autonomous driving performance of the autonomous driving vehicle in a constructed new simulation traffic scenario.

In the model use phase, generalization of the traffic scenario and the interaction type is completed by using the models, so that there may be no need for manual participation in the generalization. This can ensure generalization efficiency and reduce labor costs.

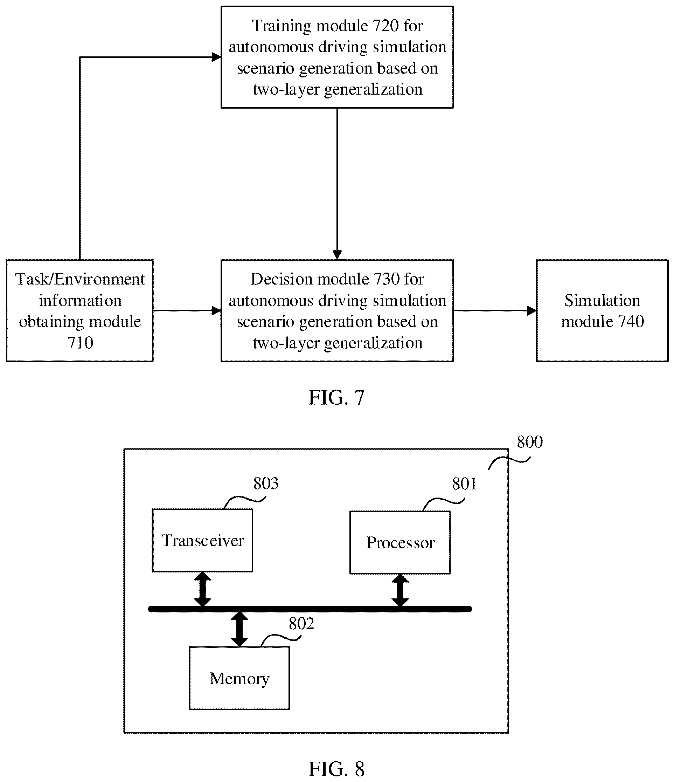

Further, based on the model generation phase and the model use phase, refer to FIG. 7. FIG. 7 is a diagram of an architecture of a system for generating a simulation scenario according to an embodiment of this application. The system for generating a simulation scenario may run on an intelligent carrier on which a computer system is installed. The intelligent carrier includes a storage component and a network communication component. Executable code of each module and the foregoing generated models are stored in the storage component. During running, a processing unit (for example, a central processing unit or a graphics processing unit) is used to invoke the executable code and the models in the storage component to generate simulation scenario data. As shown in FIG. 7, the system mainly includes the following four modules:
a task/environment information obtaining module 710, configured to: comprehensively analyze related information collected by each sensor in an autonomous driving vehicle in a road test process, to obtain key road test information for generating a simulation traffic scenario, for example, road topology and trajectory information of a dynamic obstacle such as a vehicle flow and a pedestrian flow in an original road test scenario; and further configured to: obtain each generalization condition input by a user, then transfer the key road test information to a training module 720 for autonomous driving simulation scenario generation based on two-layer generalization, and transfer the key road test information and each generalization condition to a decision module 730 for autonomous driving simulation scenario generation based on two-layer generalization;
the training module 720 for autonomous driving simulation scenario generation based on two-layer generalization, serving as a core module for supporting simulation scenario data generation and configured to: receive the key road test information transferred by the task/environment information obtaining module 710, train the key road test information according to the model generation method in FIG. 5 to obtain a traffic scenario generalization model, a behavior model allocator, and an interactive behavior model, and transfer these models to the decision module 730 for autonomous driving simulation scenario generation based on two-layer generalization;
the decision module 730 for autonomous driving simulation scenario generation based on two-layer generalization, serving as another core module for supporting simulation scenario data generation and configured to: receive the key road test information and each generalization condition transferred by the task/environment information obtaining module 710; receive the traffic scenario generalization model, the behavior model allocator, and the interactive behavior model transferred by the training module 720 for autonomous driving simulation scenario generation based on two-layer generalization; generalize a traffic scenario in the key road test information by using the traffic scenario generalization model and perform micro interaction generalization on a generalized traffic scenario by using the behavior model allocator and the interactive behavior model according to the model use method in FIG. 6 based on each generalization condition, to obtain simulation scenario data that satisfies authenticity, diversity, interactivity, and controllability; and transfer the simulation scenario data to a simulation module 740; and
the simulation module 740, configured to: receive the simulation scenario data transferred by the decision module 730 for autonomous driving simulation scenario generation based on two-layer generalization, and load the simulation scenario data into a simulator to perform an autonomous driving simulation test operation.

In conclusion, the foregoing embodiments of this application provide the method generating an autonomous driving simulation scenario based on two-layer generalization. In the method, an original traffic scenario is first generalized by using a traffic scenario generalization model based on a traffic scenario that needs to be generalized, to obtain a new traffic scenario. Then, for the new traffic scenario and a target interaction type that needs micro generalization, micro interaction generalization is implemented by using a behavior model allocator. In addition, a dynamic obstacle after the micro interaction generalization is replaced with an interactive behavior model, to obtain a large quantity of simulation traffic scenarios that satisfy authenticity, diversity, interactivity, and controllability, to satisfy a requirement on an autonomous driving simulation test.

It should be noted that the foregoing embodiments are described by using merely an example in which the computing device performs the method for generating simulation scenario data. In some embodiments, the method for generating simulation scenario data may be directly integrated into an autonomous driving simulation platform, an autonomous driving simulation test platform, an autonomous driving simulation training platform, an autonomous driving simulator, or an autonomous driving simulation test system. Alternatively, in some other embodiments, the method may be performed by another device, for example, an autonomous driving vehicle. The autonomous driving vehicle collects road test data and uses the road test data to generate diversified simulation scenario data, may stop collection immediately once determining that the simulation scenario data is sufficient, and may input the generated simulation scenario data into a simulator.

In addition, the method for generating simulation scenario data may be further applied to any device or system that has a requirement on diversity. For example, the method may be further applied to any mobile device that needs diversified simulation scenario data, including but not limited to an electric ship, an electric drone, an electric train, an electric truck, an electric lorry, or the like. Alternatively, the method may be further applied to the smart home field. For example, the generation method is first used to generalize a small quantity of environment data collected by a mobile robot (for example, a ground sweeping robot or a ground mopping robot) into diversified simulation environment data, and then the diversified simulation environment data is used to carry out a simulation test on the mobile robot, to test effect of a path planning algorithm deployed in the mobile robot in different environment scenarios.

In addition, with evolution of a system architecture and emergence of a new scenario, the method for generating simulation scenario data provided in this application is also applicable to a similar technical problem. This is not specifically limited in this application.

In addition, names of the foregoing information are merely examples. With evolution of communication technologies, the name of any foregoing information may be changed. However, regardless of how the names of the information are changed, provided that meanings of the information are the same as those of the information in this application, the information falls within the protection scope of this application.

The foregoing mainly describes, from a perspective of interaction between network elements, the solutions provided in this application. It may be understood that, to implement the foregoing functions, the foregoing network elements include corresponding hardware structures and/or software modules for performing the functions. A person of ordinary skill in the art should easily be aware that, units and algorithm steps in the examples described with reference to embodiments disclosed in this specification can be implemented by hardware or a combination of hardware and computer software in the present invention. Whether a function is performed by hardware or hardware driven by computer software depends on particular applications and design constraints of the technical solutions. A person skilled in the art may use different methods to implement the described functions for each particular application, but it shall not be considered that the implementation goes beyond the scope of the present invention.

FIG. 8 is a diagram of a structure of an apparatus for generating simulation scenario data according to an embodiment of this application. The apparatus for generating simulation scenario data may be any apparatus having a processing capability, for example, a computing device, or may be a chip or a circuit, for example, a chip or a circuit that can be disposed in a computing device. As shown in FIG. 8, the apparatus 800 for generating simulation scenario data may include a processor 801, a memory 802, and a transceiver 803, and may further include a bus system. The processor 801, the memory 802, and the transceiver 803 may be connected through the bus system.

In an implementation process, steps of the foregoing methods can be implemented by a hardware integrated logic circuit in the processor 801 or by using instructions in a form of software. The steps of the methods disclosed with reference to embodiments of this application may be directly performed by a hardware processor, or may be performed by using a combination of hardware in the processor 801 and a software module. The software module may be located in a mature storage medium in the art, for example, a random access memory, a flash memory, a read-only memory, a programmable read-only memory, an electrically erasable programmable memory, or a register. The storage medium is located in the memory 802, and the processor 801 reads information in the memory 802 and completes the steps of the foregoing methods in combination with hardware of the processor.

It should be understood that the processor 801 may be a chip. For example, the processor 801 may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

It may be understood that the memory 802 in this embodiment of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and methods described in this specification includes but is not limited to these memories and any memory of another proper type.

In this embodiment of this application, the memory 802 is configured to store instructions, and the processor 801 is configured to execute the instructions stored in the memory 802, to implement the method corresponding to the computing device according to any one or more of FIG. 2 to FIG. 6. Specifically, the processor 801 invokes the transceiver 803 to implement the following operations: first obtaining road test data collected when an autonomous driving vehicle carries out a traveling test on a real road; then generalizing a traffic scenario in the road test data, to obtain generalized road test data; and finally converting obstacle behavior in the generalized road test data into interactive behavior, to obtain simulation scenario data.

In an optional implementation, the processor 801 is specifically configured to generalize the traffic scenario in the traffic scenario data based on a traffic scenario generalization condition from a user, to obtain the generalized road test data.

In an optional implementation, the traffic scenario generalization condition may include one or more of the following: a vehicle flow density, a vehicle speed, road topology, a pedestrian density, or a pedestrian walking speed.

In an optional implementation, the processor 801 is specifically configured to: receive the traffic scenario generalization condition from the user, and input the road test data and the traffic scenario generalization condition into a traffic scenario generalization model, to obtain the generalized road test data output by the traffic scenario generalization model. The generalized road test data is obtained by the traffic scenario generalization model by generalizing traffic scenario information in the road test data based on the traffic scenario generalization condition.

In an optional implementation, the processor 801 is specifically configured to: first slice the road test data by using an interaction type between a dynamic obstacle and the autonomous driving vehicle as a reference, to obtain at least one time slice, where each time slice includes road test data corresponding to at least one interaction type; and then input each time slice and the traffic scenario generalization condition into the traffic scenario generalization model, to obtain generalized road test data that corresponds to each time slice and that is output by the traffic scenario generalization model. The generalized road test data corresponding to each time slice includes a dynamic obstacle implementing an interaction type corresponding to the time slice and one or more other dynamic obstacles.

In an optional implementation, the traffic scenario generalization model is obtained through training in the following manner: obtaining historical road test data collected when a historical autonomous driving vehicle carries out a traveling test on a real road, extracting, from the historical road test data, a traffic scenario feature corresponding to each interaction type, and obtaining the traffic scenario generalization model through training based on the traffic scenario feature corresponding to each interaction type.

In an optional implementation, the processor 801 is specifically configured to convert behavior of a key dynamic obstacle located around the autonomous driving vehicle into the interactive behavior.

In an optional implementation, the processor 801 is specifically configured to: predict a probability distribution of each dynamic obstacle in the generalized road test data in each behavior mode, allocate a target behavior mode to the dynamic obstacle based on the probability distribution, and replace behavior data of the dynamic obstacle with an interactive behavior model corresponding to the corresponding target behavior mode.

In an optional implementation, the processor 801 is specifically configured to predict, based on an interaction type generalization condition from the user, a probability distribution of the dynamic obstacle in the generalized road test data in each behavior mode corresponding to the interaction type generalization condition.

In an optional implementation, the processor 801 is specifically configured to: first receive the interaction type generalization condition from the user, where the interaction type generalization condition includes a target interaction type; and then input the generalized road test data and the interaction type generalization condition into a behavior model allocator, to obtain a probability distribution that is of the dynamic obstacle in each behavior mode corresponding to the target interaction type and that is output by the behavior model allocator.

In an optional implementation, the behavior model allocator is obtained through training in the following manner: first obtaining historical road test data collected when a historical autonomous driving vehicle carries out a traveling test on a real road; then determining a behavior mode of each dynamic obstacle in the historical road test data; next slicing the historical road test data by using an interaction type between the dynamic obstacle and the autonomous driving vehicle as a reference, to obtain at least one first historical time slice, where each first historical time slice includes historical road test data corresponding to at least one interaction type; and finally, obtaining, from the at least one first historical time slice, all first historical time slices including a same interaction type, and obtaining the behavior model allocator through training based on all the first historical time slices including the same interaction type and a behavior mode of a dynamic obstacle in each first historical time slice.

In an optional implementation, the interactive behavior model is obtained through training in the following manner: first obtaining historical road test data collected when a historical autonomous driving vehicle carries out a traveling test on a real road; then slicing the historical road test data by using a dynamic obstacle as a reference, to obtain at least one second historical time slice, where each second historical time slice includes historical road test data corresponding to at least one dynamic obstacle; next determining a behavior mode of the dynamic obstacle included in each second historical time slice; and finally obtaining, through training based on each second historical time slice corresponding to each dynamic obstacle including a same behavior mode, an interactive behavior model corresponding to the behavior mode.

In an optional implementation, the target interaction type includes one or more of the following: vehicle following, vehicle cut-in, merging from a ramp, or collision interaction.

In an optional implementation, the behavior mode includes one or more of the following: leftward lane change, rightward lane change, lane keeping, smooth merging, or aggressive merging.

For concepts, explanations, detailed descriptions, and other steps of the apparatus 800 for generating simulation scenario data that are related to the technical solutions of the computing device provided in embodiments of this application, refer to descriptions of the content in the foregoing methods or other embodiments. Details are not described herein again.

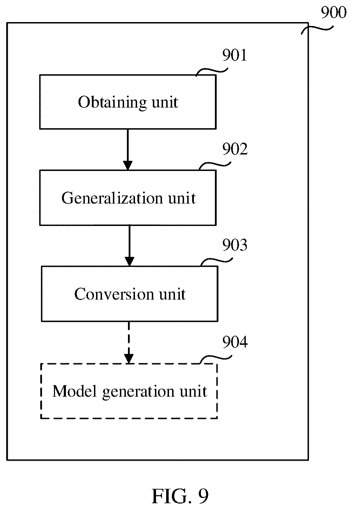

Based on the foregoing embodiments and a same concept, FIG. 9 is a diagram of another apparatus for generating simulation scenario data according to an embodiment of this application. For example, the apparatus 900 for generating simulation scenario data may be the apparatus for generating simulation scenario data according to any one of the foregoing embodiments, or may be a chip or a circuit, for example, a chip or a circuit that can be disposed in an apparatus for generating simulation scenario data. The apparatus 900 for generating simulation scenario data may implement steps performed by the computing device in the method corresponding to any one or more of FIG. 2 to FIG. 6.

As shown in FIG. 9, the apparatus 900 for generating simulation scenario data may include an obtaining unit 901, a generalization unit 902, and a conversion unit 903. The obtaining unit 901 is configured to obtain road test data collected when an autonomous driving vehicle carries out a traveling test on a real road. The generalization unit 902 is configured to generalize a traffic scenario in the road test data, to obtain generalized road test data. The conversion unit 903 is configured to convert obstacle behavior in the generalized road test data into interactive behavior, to obtain simulation scenario data.

In some embodiments, the apparatus 900 for generating simulation scenario data may further include a model generation unit 904. The model generation unit 904 is configured to: obtain historical road test data collected when a historical autonomous driving vehicle carries out a traveling test on a real road, extract, from the historical road test data, a traffic scenario feature corresponding to each interaction type, and obtain a traffic scenario generalization model through training based on the traffic scenario feature corresponding to each interaction type.

In some embodiments, the apparatus 900 for generating simulation scenario data may further include the model generation unit 904. The model generation unit 904 is configured to: first obtain historical road test data collected when a historical autonomous driving vehicle carries out a traveling test on a real road; then determine a behavior mode of each dynamic obstacle in the historical road test data; next slice the historical road test data by using an interaction type between the dynamic obstacle and the autonomous driving vehicle as a reference, to obtain at least one first historical time slice, where each first historical time slice includes historical road test data corresponding to at least one interaction type; and obtain, from the at least one first historical time slice, all first historical time slices including a same interaction type, and obtain a behavior model allocator through training based on all the first historical time slices including the same interaction type and a behavior mode of a dynamic obstacle in each first historical time slice.

In some embodiments, the apparatus 900 for generating simulation scenario data may further include the model generation unit 904. The model generation unit 904 is configured to: first obtain historical road test data collected when a historical autonomous driving vehicle carries out a traveling test on a real road; then slice the historical road test data by using a dynamic obstacle as a reference, to obtain at least one second historical time slice, where each second historical time slice includes historical road test data corresponding to at least one dynamic obstacle; next determine a behavior mode of the dynamic obstacle included in each second historical time slice; and finally obtain, through training based on each second historical time slice corresponding to each dynamic obstacle including a same behavior mode, an interactive behavior model corresponding to the behavior mode.

During implementation, the obtaining unit 901 obtains, through interaction with the autonomous driving vehicle, the road test data collected by the autonomous driving vehicle. The obtaining unit 901 may be a receiving unit, a receiver, an input interface, a pin, or a circuit. When the apparatus 900 for generating simulation scenario data includes a storage unit, the storage unit is configured to store computer instructions. The obtaining unit 901, the generalization unit 902, the conversion unit 903, and the model generation unit 904 are separately communicatively connected to the storage unit, and separately execute the computer instructions stored in the storage unit, so that the apparatus 900 for generating simulation scenario data can be configured to perform the method performed by the computing device according to any one of the foregoing embodiments. The obtaining unit 901, the generalization unit 902, the conversion unit 903, and the model generation unit 904 may be a general-purpose central processing unit (CPU), a microprocessor, or an application-specific integrated circuit (application-specific integrated circuit, ASIC). The storage unit is a storage unit in a chip, for example, a register or a cache. Alternatively, the storage unit may be a storage unit that is in the apparatus 900 for generating simulation scenario data and that is located outside the chip, for example, a read-only memory (read-only memory, ROM) or another type of static storage device that can store static information and instructions, or a random access memory (random access memory, RAM).

For concepts, explanations, detailed descriptions, and other steps of the apparatus 900 for generating simulation scenario data that are related to the technical solutions provided in embodiments of this application, refer to descriptions of the content in the foregoing methods or other embodiments. Details are not described herein again.

It should be understood that division into units of the apparatus 900 for generating simulation scenario data is merely logical function division. During actual implementation, all or some of the units may be integrated into one physical entity, or may be physically separated. In this embodiment of this application, the obtaining unit 901, the generalization unit 902, the conversion unit 903, and the model generation unit 904 may be implemented by the processor 801 in FIG. 8.

Based on the foregoing content, this application further provides a computing device. The computing device includes a processor. The processor is connected to a memory, the memory is configured to store a computer program, and the processor is configured to execute the computer program stored in the memory, to enable the computing device to implement the method according to any one of the embodiments in FIG. 2 to FIG. 6.

Based on the foregoing content, this application further provides a computing device. The computing device includes a processor and a memory. The memory is configured to store computer program instructions, and the processor is configured to run the computer program instructions, to implement the method according to any one of the embodiments in FIG. 2 to FIG. 6.

Based on the foregoing content, this application further provides a chip. The chip includes a processor and an interface. The processor is configured to read an instruction through the interface, to perform the method according to any one of the embodiments in FIG. 2 to FIG. 6.

Based on the foregoing content, this application further provides an autonomous driving test system, including the foregoing computing device and an autonomous driving vehicle.

Based on the foregoing content, this application further provides a computer-readable storage medium. The computer-readable storage medium stores a computer program. When the computer program is run, the method according to any one of the embodiments in FIG. 2 to FIG. 6 is implemented.

Based on the foregoing content, this application further provides a computer program product. When the computer program product is run on a processor, the method according to any one of the embodiments in FIG. 2 to FIG. 6 is implemented.

Terms such as "component", "unit", and "system" used in this specification indicate computer-related entities, hardware, firmware, combinations of hardware and software, software, or software being executed. For example, a component may be but is not limited to a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed by various computer-readable media that store various data structures. For example, the components may communicate by using a local and/or remote process and based on a signal having one or more data packets (for example, data from two components interacting with another component in a local system, a distributed system, and/or across a network such as the Internet interacting with another system by using the signal).

A person of ordinary skill in the art may be aware that, various illustrative logical blocks (illustrative logical blocks) and steps (steps) described with reference to embodiments disclosed in this specification can be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it shall not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, the division into units is merely logical function division and may be other division during actual implementation. For example, a plurality of units or components may be combined or integrated into another system, or some features may be ignored or may not be performed. In addition, the displayed or discussed mutual couplings or direct couplings or communication connection may be implemented through some interfaces. The indirect couplings or communication connection between apparatuses or units may be implemented in electronic, mechanical, or other forms.

The units described as separate components may or may not be physically separate, and components displayed as units may or may not be physical units, may be located in one place, or may be distributed on a plurality of network units. Some or all of the units may be selected according to an actual requirement to achieve the objectives of the solutions of embodiments.

In addition, functional units in embodiments of this application may be integrated into one processing unit, each of the units may exist alone physically, or two or more units are integrated into one unit.

When the functions are implemented in a form of software functional unit and sold or used as an independent product, the functions may be stored in a computer-readable storage medium. Based on such an understanding, the technical solutions of this application essentially or parts contributing to the prior art or some of the technical solutions may be embodied in a form of software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for generating simulation scenario data, comprising:
obtaining road test data collected when an autonomous driving vehicle carries out a traveling test on a real road;
generalizing a traffic scenario in the road test data, to obtain generalized road test data; and
converting obstacle behavior in the generalized road test data into interactive behavior, to obtain simulation scenario data.

2. The method according to claim 1, wherein the generalizing a traffic scenario in the traffic scenario data, to obtain generalized road test data comprises:
generalizing the traffic scenario in the traffic scenario data based on a traffic scenario generalization condition from a user, to obtain the generalized road test data.

3. The method according to claim 2, wherein the traffic scenario generalization condition comprises one or more of the following: a vehicle flow density, a vehicle speed, road topology, a pedestrian density, or a pedestrian walking speed.

4. The method according to claim 2 or 3, wherein the generalizing the traffic scenario in the traffic scenario data based on a traffic scenario generalization condition from a user, to obtain the generalized road test data comprises:
receiving the traffic scenario generalization condition from the user; and
inputting the road test data and the traffic scenario generalization condition into a traffic scenario generalization model, to obtain the generalized road test data output by the traffic scenario generalization model, wherein
the generalized road test data is obtained by the traffic scenario generalization model by generalizing traffic scenario information in the road test data based on the traffic scenario generalization condition.

5. The method according to claim 4, wherein the inputting the road test data and the traffic scenario generalization condition into a traffic scenario generalization model, to obtain the generalized road test data output by the traffic scenario generalization model comprises:
slicing the road test data by using an interaction type between a dynamic obstacle and the autonomous driving vehicle as a reference, to obtain at least one time slice, wherein each time slice comprises road test data corresponding to at least one interaction type; and
inputting each time slice and the traffic scenario generalization condition into the traffic scenario generalization model, to obtain generalized road test data that corresponds to each time slice and that is output by the traffic scenario generalization model, wherein
the generalized road test data corresponding to each time slice comprises a dynamic obstacle implementing an interaction type corresponding to the time slice and one or more other dynamic obstacles.

6. The method according to claim 4 or 5, wherein the traffic scenario generalization model is obtained through training in the following manner:
obtaining historical road test data collected when a historical autonomous driving vehicle carries out a traveling test on a real road; and
extracting, from the historical road test data, a traffic scenario feature corresponding to each interaction type, and obtaining the traffic scenario generalization model through training based on the traffic scenario feature corresponding to each interaction type.

7. The method according to any one of claims 1 to 6, wherein the converting obstacle behavior in the generalized road test data into interactive behavior comprises:
converting behavior of a key dynamic obstacle located around the autonomous driving vehicle into the interactive behavior.

8. The method according to any one of claims 1 to 7, wherein the converting obstacle behavior in the generalized road test data into interactive behavior comprises:
predicting a probability distribution of a dynamic obstacle in the generalized road test data in each behavior mode, allocating a target behavior mode to the dynamic obstacle based on the probability distribution, and replacing behavior data of the dynamic obstacle with an interactive behavior model corresponding to the target behavior mode.

9. The method according to claim 8, wherein the predicting a probability distribution of a dynamic obstacle in the generalized road test data in each behavior mode comprises:
predicting, based on an interaction type generalization condition from the user, a probability distribution of the dynamic obstacle in the generalized road test data in each behavior mode corresponding to the interaction type generalization condition.

10. The method according to claim 9, wherein the predicting, based on an interaction type generalization condition from the user, a probability distribution of the dynamic obstacle in the generalized road test data in each behavior mode corresponding to the interaction type generalization condition comprises:
receiving the interaction type generalization condition from the user, wherein the interaction type generalization condition comprises a target interaction type; and
inputting the generalized road test data and the target interaction type into a behavior model allocator, to obtain a probability distribution that is of the dynamic obstacle in each behavior mode corresponding to the target interaction type and that is output by the behavior model allocator.

11. The method according to claim 10, wherein the behavior model allocator is obtained through training in the following manner:
obtaining historical road test data collected when a historical autonomous driving vehicle carries out a traveling test on a real road;
determining a behavior mode of each dynamic obstacle in the historical road test data;
slicing the historical road test data by using an interaction type between the dynamic obstacle and the autonomous driving vehicle as a reference, to obtain at least one first historical time slice, wherein each first historical time slice comprises historical road test data corresponding to at least one interaction type; and
obtaining, from the at least one first historical time slice, all first historical time slices comprising a same interaction type, and obtaining the behavior model allocator through training based on all the first historical time slices comprising the same interaction type and a behavior mode of a dynamic obstacle in each first historical time slice.

12. The method according to any one of claims 8 to 11, wherein the interactive behavior model is obtained through training in the following manner:
obtaining historical road test data collected when a historical autonomous driving vehicle carries out a traveling test on a real road;
slicing the historical road test data by using the dynamic obstacle as a reference, to obtain at least one second historical time slice, wherein each second historical time slice comprises historical road test data corresponding to at least one dynamic obstacle;
determining a behavior mode of the dynamic obstacle comprised in each second historical time slice; and
obtaining, through training based on each second historical time slice corresponding to each dynamic obstacle comprising a same behavior mode, an interactive behavior model corresponding to the behavior mode.

13. The method according to any one of claims 8 to 12, wherein the method satisfies one or more of the following conditions:
the target interaction type comprises vehicle following, vehicle cut-in, merging from a ramp, or collision interaction; and
the behavior mode comprises leftward lane change, rightward lane change, lane keeping, smooth merging, or aggressive merging.

14. An apparatus for generating simulation scenario data, comprising:
an obtaining unit, configured to obtain road test data collected when an autonomous driving vehicle carries out a traveling test on a real road;
a generalization unit, configured to generalize a traffic scenario in the road test data, to obtain generalized road test data; and
a conversion unit, configured to convert obstacle behavior in the generalized road test data into interactive behavior, to obtain simulation scenario data.

15. The apparatus according to claim 14, wherein the generalization unit is specifically configured to:
generalize the traffic scenario in the traffic scenario data based on a traffic scenario generalization condition from a user, to obtain the generalized road test data.

16. The apparatus according to claim 14, wherein the traffic scenario generalization condition comprises one or more of the following: a vehicle flow density, a vehicle speed, road topology, a pedestrian density, or a pedestrian walking speed.

17. The apparatus according to claim 15 or 16, wherein the generalization unit is specifically configured to:
receive the traffic scenario generalization condition from the user; and
input the road test data and the traffic scenario generalization condition into a traffic scenario generalization model, to obtain the generalized road test data output by the traffic scenario generalization model, wherein
the generalized road test data is obtained by the traffic scenario generalization model by generalizing traffic scenario information in the road test data based on the traffic scenario generalization condition.

18. The apparatus according to claim 17, wherein the generalization unit is specifically configured to:
slice the road test data by using an interaction type between a dynamic obstacle and the autonomous driving vehicle as a reference, to obtain at least one time slice, wherein each time slice comprises road test data corresponding to at least one interaction type; and
input each time slice and the traffic scenario generalization condition into the traffic scenario generalization model, to obtain generalized road test data that corresponds to each time slice and that is output by the traffic scenario generalization model, wherein
the generalized road test data corresponding to each time slice comprises a dynamic obstacle implementing an interaction type corresponding to the time slice and one or more other dynamic obstacles.

19. The apparatus according to claim 17 or 18, further comprising a model generation unit, wherein
the model generation unit is configured to:
obtain historical road test data collected when a historical autonomous driving vehicle carries out a traveling test on a real road; and
extract, from the historical road test data, a traffic scenario feature corresponding to each interaction type, and obtain the traffic scenario generalization model through training based on the traffic scenario feature corresponding to each interaction type.

20. The apparatus according to any one of claims 14 to 19, wherein the conversion unit is specifically configured to:
convert behavior of a key dynamic obstacle located around the autonomous driving vehicle into the interactive behavior.

21. The apparatus according to any one of claims 14 to 20, wherein the conversion unit is specifically configured to:
predict a probability distribution of a dynamic obstacle in the generalized road test data in each behavior mode, allocate a target behavior mode to the dynamic obstacle based on the probability distribution, and replace behavior data of the dynamic obstacle with an interactive behavior model corresponding to the target behavior mode.

22. The apparatus according to claim 21, wherein the conversion unit is specifically configured to:
predict, based on an interaction type generalization condition from the user, a probability distribution of the dynamic obstacle in the generalized road test data in each behavior mode corresponding to the interaction type generalization condition.

23. The apparatus according to claim 22, wherein the conversion unit is specifically configured to:
receive the interaction type generalization condition from the user, wherein the interaction type generalization condition comprises a target interaction type; and
input the generalized road test data and the target interaction type into a behavior model allocator, to obtain a probability distribution that is of the dynamic obstacle in each behavior mode corresponding to the target interaction type and that is output by the behavior model allocator.

24. The apparatus according to claim 23, further comprising the model generation unit, wherein
the model generation unit is configured to:
obtain historical road test data collected when a historical autonomous driving vehicle carries out a traveling test on a real road;
determine a behavior mode of each dynamic obstacle in the historical road test data;
slice the historical road test data by using an interaction type between the dynamic obstacle and the autonomous driving vehicle as a reference, to obtain at least one first historical time slice, wherein each first historical time slice comprises historical road test data corresponding to at least one interaction type; and
obtain, from the at least one first historical time slice, all first historical time slices comprising a same interaction type, and obtain the behavior model allocator through training based on all the first historical time slices comprising the same interaction type and a behavior mode of a dynamic obstacle in each first historical time slice.

25. The apparatus according to any one of claims 21 to 24, further comprising the model generation unit, wherein
the model generation unit is configured to:
obtain historical road test data collected when a historical autonomous driving vehicle carries out a traveling test on a real road;
slice the historical road test data by using the dynamic obstacle as a reference, to obtain at least one second historical time slice, wherein each second historical time slice comprises historical road test data corresponding to at least one dynamic obstacle;
determine a behavior mode of the dynamic obstacle comprised in each second historical time slice; and
obtain, through training based on each second historical time slice corresponding to each dynamic obstacle comprising a same behavior mode, an interactive behavior model corresponding to the behavior mode.

26. The apparatus according to any one of claims 21 to 25, wherein
the target interaction type comprises vehicle following, vehicle cut-in, merging from a ramp, or collision interaction; and/or
the behavior mode comprises leftward lane change, rightward lane change, lane keeping, smooth merging, or aggressive merging.

27. A computing device, comprising a processor and a memory, wherein the processor is coupled to the memory, and the processor is configured to execute a computer program stored in the memory, to enable the computing device to perform the method according to any one of claims 1 to 13.

28. A chip, comprising a processor and an interface, wherein the processor is configured to read an instruction through the interface, to perform the method according to any one of claims 1 to 13.

29. A computer-readable storage medium, wherein the computer-readable storage medium stores a computer program, and when the computer program is run, the method according to any one of claims 1 to 13 is implemented.

30. A computer program product, comprising a computer program, wherein when the computer program is executed by a communication apparatus, the method according to any one of claims 1 to 13 is implemented.
